(19) Europäisches Patentamt
European Patent Office
Office européen des brevets

(11) **EP 3 843 255 B1**

(12) **FASCICULE DE BREVET EUROPEEN**

(45) Date de publication et mention
de la délivrance du brevet:
**04.05.2022 Bulletin 2022/18**

(21) Numéro de dépôt: **20214211.3**

(22) Date de dépôt: **15.12.2020**

(51) Classification Internationale des Brevets (IPC):
***H02M 7/217*** *(2006.01)*

(52) Classification Coopérative des Brevets (CPC):
**H02M 7/217;** H02J 2207/50

(54) **CIRCUIT POUR ASSERVIR L'IMPEDANCE D'ENTREE D'UNE INTERFACE D'UN RECUPERATEUR**

SCHALTUNG ZUR STEUERUNG DER EINGANGSIMPEDANZ EINER REKUPERATOR-SCHNITTSTELLE

CIRCUIT FOR CONTROLLING THE INPUT IMPEDANCE OF A RECOVERY DEVICE INTERFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2019 FR 1915436**

(43) Date de publication de la demande:
**30.06.2021 Bulletin 2021/26**

(73) Titulaire: **COMMISSARIAT À L'ÉNERGIE ATOMIQUE ET AUX ÉNERGIES ALTERNATIVES**
**75015 Paris (FR)**

(72) Inventeur: **QUELEN, Anthony**
**38054 GRENOBLE CEDEX 09 (FR)**

(74) Mandataire: **Brevalex**
**95, rue d'Amsterdam**
**75378 Paris Cedex 8 (FR)**

(56) Documents cités:
- **CARREON-BAUTISTA SALVADOR ET AL: "Boost Converter With Dynamic Input Impedance Matching for Energy Harvesting With Multi-Array Thermoelectric Generators", IEEE TRANSACTIONS ON INDUSTRIAL ELECTRONICS, IEEE SERVICE CENTER, PISCATAWAY, NJ, USA, vol. 61, no. 10, 1 octobre 2014 (2014-10-01), pages 5345-5353, XP011546967, ISSN: 0278-0046, DOI: 10.1109/TIE.2014.2300035 [extrait le 2014-05-02]**
- **SERDIJN W A ET AL: "Introduction to RF Energy Harvesting", WEARABLE SENSORS : FUNDAMENTALS, IMPLEMENTATION AND APPLICATIONS, ELSEVIER, ACAD. PRESS, NL, PAGE(S) 299 - 322 , 14 août 2014 (2014-08-14), XP009515871, ISBN: 978-0-12-418662-0 Extrait de l'Internet: URL:https://api.elsevier.com/content/artic le/PII:B9780124186620000192?httpAccept=tex t/plain [extrait le 2014-08-22]**
- **HSIEH PING-HSUAN ET AL: "Improving the Scavenged Power of Nonlinear Piezoelectric Energy Harvesting Interface at Off-Resonance by Introducing Switching Delay", IEEE TRANSACTIONS ON POWER ELECTRONICS, INSTITUTE OF ELECTRICAL AND ELECTRONICS ENGINEERS, USA, vol. 30, no. 6, 1 juin 2015 (2015-06-01), pages 3142-3155, XP011570314, ISSN: 0885-8993, DOI: 10.1109/TPEL.2014.2334611 [extrait le 2015-01-16]**

**Description**

**DOMAINE TECHNIQUE**

La présente demande est relative au domaine de la récupération d'énergie vibratoire électromagnétique et trouve notamment des applications dans les systèmes dits « autonomes » en énergie tels que les nœuds de capteurs sans fil, par exemple mettant en œuvre une récupération d'énergie solaire, ou mécanique ou électromagnétique ou thermique.

Elle vise plus particulièrement une architecture électronique d'interface entre un étage récupérateur d'énergie destiné à produire un signal électrique variable, en amplitude et/ou en fréquence, que nous appellerons signal alternatif AC par simplification, et un étage de charge doté d'un moyen permettant de stocker cette énergie à partir d'un signal DC.

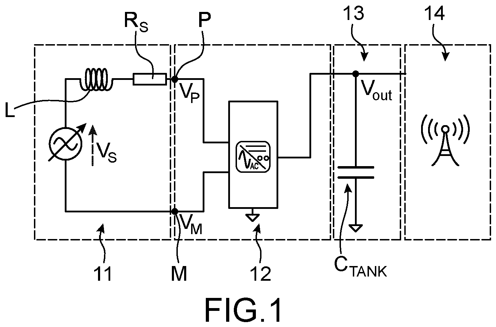

Une architecture simplifiée d'un tel système de récupération d'énergie est donnée sur la figure 1, avec un récupérateur 11 modélisé par, ou ayant comme circuit électrique équivalent, un générateur 1, une inductance L, et une résistance $R_S$ mis en série.

De tels récupérateurs sont typiquement suivis d'un circuit d'interface 12 électronique qui permet de convertir l'énergie du récupérateur afin de la stocker dans un moyen de stockage 13 de charges tel qu'une batterie ou une grande capacité $C_{tank}$. Une fois l'énergie stockée, elle peut être utilisée pour capter des informations de l'environnement et potentiellement émettre des informations à une base centrale. Le moyen de stockage 13 de charges peut être, pour cela, associé à un émetteur RF 14.

Un exemple d'un tel circuit de récupération peut être trouvé dans la publication "Boost Converter With Dynamic Input Impedance Matching for Energy Harvesting With Multi-Array Thermoelectric Generators" (IEEE TRANSACTIONS ON INDUSTRIAL ELECTRONICS).

Le circuit d'interface 12 est notamment doté d'un étage redresseur AC-DC, qui permet d'effectuer la conversion d'un signal AC différentiel en un signal DC. Les contraintes typiques de réalisation de ce circuit d'interface 12 électronique sont :

- de maximiser l'énergie stockée dans le moyen de stockage 13,
- de maximiser le rendement d'extraction, autrement dit de maximiser l'énergie électrique extraite du récupérateur électromagnétique 11,
- de maximiser le rendement de conversion autrement dit de minimiser les pertes du redresseur AC-DC,
- de limiter le nombre de composants externes, notamment d'inductances, de capacités externes afin de minimiser le coût du circuit et de minimiser son encombrement sur un substrat, toujours pour des raisons de coût.

Le document de Radhakrishna et al. : "A low-power integrated power converter for an electromagnetic vibration energy harvester with 150 mV-AC sold startup, frequency tuning, and 50 Hz AC-to-DC conversion", IEEE 2018 présente une architecture de circuit d'interface avec un circuit de régulation permettant d'améliorer le rendement d'extraction. Le circuit d'interface ici présenté utilise une inductance externe au récupérateur. Il met en œuvre une régulation lente qui n'est pas adaptée à certains types de récupérateurs, en particulier à ceux permettant d'extraire l'énergie provenant de chocs épisodiques et/ou où le signal produit par le récupérateur varie d'une utilisation à l'autre.

Le document de Leicht et al. : "Electromagnetic Vibration Energy Harvester Interface IC with Conduction-Angle-Controlled Maximum-Power-Point Tracking and Harvesting Efficiencies of up to 90%", ISSCC 2015 présente également une architecture de circuit d'interface au rendement d'extraction amélioré. Ce circuit fait appel à un microcontrôleur pour effectuer une régulation de l'impédance d'entrée du circuit d'interface. Il a pour inconvénient d'utiliser une inductance externe au récupérateur et une résistance externe qui limitent le rendement de conversion.

Il se pose le problème de réaliser un nouveau circuit d'interface entre étage de récupération d'énergie électromagnétique et un étage de charge, qui ait un rendement énergétique amélioré et qui, de préférence, présente le moins possible de composants passifs externes encombrants et présente une surface minimale.

**EXPOSÉ DE L'INVENTION**

Un mode de réalisation de la présente invention prévoit un circuit électronique d'interface destiné à être relié en entrée à un étage de récupération d'énergie, l'étage de récupération d'énergie ayant un circuit équivalent ou étant modélisable par un circuit comprenant une source de tension alternative en série avec une inductance Ls et une résistance Rs, le circuit électronique d'interface étant apte à être relié en sortie à un étage de charge, le circuit électronique d'interface comprenant :

- des première et deuxième bornes d'entrée recevant un signal électrique délivré par ledit étage de récupération entre ces bornes,

- un premier interrupteur, agencé entre la première borne et la deuxième borne et apte à alternativement connecter ou déconnecter la première borne et la deuxième borne l'une de l'autre, l'état fermé ou ouvert du premier interrupteur étant régi par un premier signal de commande,
- un deuxième interrupteur, disposé entre ladite première borne et l'étage de charge et apte à alternativement connecter ou déconnecter une sortie du circuit électronique d'interface dudit étage de charge en permettant respectivement à un courant de circuler ou non entre ladite première borne et ledit étage de charge, l'état ouvert ou fermé du deuxième interrupteur étant régi par un deuxième signal de commande,
- un bloc de contrôle du premier interrupteur et du deuxième interrupteur configuré pour produire ledit premier signal de commande et ledit deuxième signal de commande, le bloc de contrôle étant apte à faire passer le circuit électronique d'interface dans un mode de fonctionnement dans lequel ledit circuit électronique d'interface suit une succession de phases durant chacune desquelles ledit circuit électronique d'interface adopte une première configuration puis une deuxième configuration, la première configuration étant une configuration parmi une configuration de décharge et une configuration de charge, la deuxième configuration étant une configuration parmi une configuration de charge et une configuration de décharge et différente la première configuration, la configuration de charge étant une configuration du premier interrupteur et du deuxième interrupteur de sorte à déconnecter la sortie du circuit électronique d'interface dudit étage de charge et qu'un courant de charge $I_{ON}$ circule entre la première borne et la deuxième borne, la configuration de décharge étant une configuration du premier interrupteur et du deuxième interrupteur, de sorte que ladite première borne et ladite deuxième borne sont déconnectées entre elles et la sortie dudit circuit électronique d'interface est connectée à l'étage de charge de sorte qu'un courant de décharge $I_{OFF}$ circule entre la sortie du circuit électronique d'interface et l'étage de charge, le circuit électronique d'interface étant doté en outre :
- d'un circuit de régulation pour à asservir une valeur moyenne d'impédance d'entrée $\overline{Zin}$ du circuit électronique d'interface à une valeur d'impédance optimale prédéterminée $R_{opt}$, ledit circuit de régulation comprenant :
- un premier circuit délivrant un premier signal $V_3$ proportionnel à un courant moyen $\overline{Ih}$ dans une inductance de l'étage de récupération, et
- un deuxième circuit délivrant un deuxième signal $V_4$ proportionnel à une tension moyenne $\overline{Vh}$ aux bornes d'une source de tension interne dudit étage de récupération,
- un comparateur configuré pour comparer le premier signal $V_3$ et le deuxième signal $V_4$ et produire en sortie en fonction de cette comparaison un signal indicateur apte à indiquer qu'un rapport entre la tension moyenne $\overline{Vh}$ et le courant moyen $\overline{Ih}$ sur un intervalle de temps donné a atteint la valeur d'impédance optimale prédéterminée $R_{opt}$ et à déclencher un passage de ladite deuxième configuration à ladite première configuration.

Un tel circuit de régulation permet de d'obtenir un rendement d'extraction amélioré.

Selon un monde de réalisation, le circuit de régulation peut comprendre :

- un ou plusieurs étages de copie du courant de charge,
- un ou plusieurs étages de copie du courant de décharge,
- un étage dérivateur de courant de charge ou décharge,
- une pluralité d'étages intégrateurs.

Le circuit de régulation peut être alors configuré pour à partir d'au moins une copie du courant de charge $I_{ON}$ et d'au moins une copie du courant de décharge $I_{OFF}$ produire ledit premier signal $V_3$ aux bornes d'une première capacité d'intégration d'un premier étage intégrateur, et pour à partir d'au moins une copie du courant de charge et d'au moins une dérivée d'une copie du courant de charge ou à partir d'au moins une copie du courant de décharge et d'au moins une dérivée d'une copie du courant de décharge, produire ledit deuxième signal $V_4$ aux bornes d'une deuxième capacité d'intégration d'un deuxième étage intégrateur.

Avantageusement, le bloc de contrôle peut être configuré de sorte que :

- lorsque le circuit d'interface est dans ladite première configuration depuis une durée prédéfinie, à l'issue de la durée prédéfinie :
- le bloc de contrôle maintient la première configuration pendant au moins une période minimale prédéterminée lorsque la sortie dudit comparateur est dans un état prédéterminé, ladite durée prédéfinie étant égale à la période minimale prédéterminée ou à un multiple de ladite période minimale prédéterminée,
- le bloc de contrôle déclenche un passage de la première configuration à ladite deuxième configuration lorsque la sortie dudit comparateur est dans un autre état, différent dudit état prédéterminé, puis,
- lorsque le circuit d'interface passe dans la deuxième configuration, le bloc de contrôle maintient la deuxième configuration jusqu'à ce que la sortie dudit comparateur bascule dudit autre état audit état prédéterminé, cette bascule produisant ledit signal indicateur.

Selon une possibilité de mise en œuvre, le circuit de régulation peut comprendre en outre : un premier élément de remise à zéro et un deuxième élément de remise à zéro configurés respectivement pour vider la première capacité et la deuxième capacité consécutivement à la réception d'un signal de remise à zéro, le signal de remise à zéro étant produit :

- lorsque ledit circuit d'interface est dans la première configuration et qu'au moins une période minimale prédéterminée s'est écoulée depuis le passage dans la première configuration et que la sortie dudit comparateur se trouve dans ledit état prédéterminé, ou
- lorsque ledit circuit d'interface se trouve dans la deuxième configuration et que la sortie dudit comparateur bascule dans ledit état prédéterminé.

Avantageusement, le circuit électronique d'interface peut comprendre en outre un étage de retard configuré pour émettre un signal de fin de période minimale prédéterminée un délai prédéterminé après le début de la première configuration.

Selon un mode avantageux, le circuit de régulation appartient à un bloc générateur à destination duquel le signal de fin de période minimale prédéterminée est transmis, ledit bloc générateur étant configuré pour lorsque le circuit d'interface passe dans la première configuration, quel que soit l'état en sortie du comparateur après la période minimale prédéterminée émettre le signal de remise à zéro puis, après une nouvelle période minimale prédéterminée, lorsque la sortie dudit comparateur est dans ledit autre état, émettre un signal indicateur de fin de première configuration.

Selon une première possibilité de mise en œuvre, la première capacité se charge, pendant ledit intervalle de temps donné, à partir d'un courant dit « de numérateur » qui dépend ou est égal à une somme :

- d'un courant résultant d'une copie du courant de charge pendant une durée d'une configuration de charge et,
- d'un autre courant résultant d'une copie du courant de décharge pendant une durée d'une configuration de décharge.

Avantageusement, le premier signal $V_3$ peut dépendre du produit :

$$\overline{I_H}T = \int_0^T T_{ON}I_{ON} + T_{OFF}I_{OFF}\,dt$$

avec :

- T la durée dudit intervalle de temps donné,
- $T_{ON}$ la durée de la configuration de charge pendant de l'intervalle de temps donné, et
- $T_{OFF}$ la durée de ladite configuration de décharge pendant l'intervalle de temps donné.

En variante, selon une deuxième possibilité de mise en œuvre, la première capacité se charge à partir d'un courant dit « de numérateur », le courant de numérateur dépendant ou étant égal à une somme :

- d'un courant résultant d'une copie du courant de charge pendant une durée d'une configuration de charge,
- d'un courant résultant d'une dérivée d'une copie du courant de charge,
- d'un autre courant résultant d'une copie du courant de décharge pendant une durée d'une configuration de décharge.

Avantageusement, le premier signal peut dépendre du produit :

$$\overline{I_H}T = \int_0^T T_{ON}\left(I_{ON} - \frac{1}{2}T_{ON}\frac{dI_{ON}}{dt}\right) + T_{OFF}I_{OFF}\,dt$$

avec :

- T la durée dudit intervalle de temps donné,
- $T_{ON}$ la durée de la configuration de charge pendant ladite phase donnée, et

- $T_{OFF}$ la durée de ladite configuration de décharge pendant ledit intervalle de temps donné.

Selon une possibilité de réalisation, le circuit de régulation peut comprendre un autre étage intégrateur doté d'une autre capacité d'intégration qui se charge à partir d'un courant dit « de dénominateur » et aux bornes de laquelle une tension est produite, le courant de dénominateur dépendant, ou étant égal à, la somme :

- d'un courant résultant d'une copie du courant de charge pendant la durée d'une configuration de charge,
- d'un autre courant résultant d'une dérivée d'une copie du courant de charge pendant une durée d'une configuration de charge, ledit deuxième signal $V_4$ produit aux bornes de ladite deuxième capacité d'intégration se chargeant à partir d'un courant résultant d'une conversion tension-courant de ladite tension produite par ladite autre capacité d'intégration.

Avantageusement, le deuxième signal $V_4$ est représentatif de la tension moyenne $\overline{Vh}$, avec :

$$\overline{Vh} * T_{ON} = R_S \int_0^{T_{ON}} \frac{L}{R_S} * \frac{dI_{ON}}{dt} + I_{ON}\, dt$$

$T_{ON}$ étant la durée d'une configuration de décharge.
Selon une variante de réalisation du circuit électronique d'interface dans lequel ladite première configuration est une configuration de décharge, ledit signal indicateur indiquant une fin de configuration de charge, ledit circuit de régulation peut comprendre en outre :

- un étage de conversion tension courant configuré pour convertir une copie d'une tension de sortie en sortie dudit circuit d'interface en un courant image de cette tension de sortie, ledit circuit de régulation comportant un autre étage intégrateur doté d'une autre capacité d'intégration qui se charge à partir d'un courant dit « de dénominateur » et aux bornes de laquelle une tension dite « d'intégration » est produite, le courant de dénominateur dépendant, ou étant égal à, la somme :
- d'un courant $K_V*V_{OUT}$, résultant d'une conversion produit par ledit étage de conversion tension courant,
- d'un courant $K_P*I_{OFF}$ résultant d'une copie du courant de décharge,
- d'un autre courant $K_{D1}*dI_{OFF}/dt$ résultant d'une dérivée d'une copie du courant de décharge $I_{OFF}$, ledit deuxième signal $V_4$ étant produit aux bornes de ladite deuxième capacité d'intégration se chargeant à partir d'un courant résultant d'une conversion tension-courant de ladite tension d'intégration produite par ladite autre capacité d'intégration.

Selon cette variante, le deuxième signal $V_4$ peut être représentatif de la tension moyenne $\overline{\overline{Vh}}$, telle que :

$$\overline{Vh} * T_{OFF} = R_S \int_0^{T_{OFF}} \frac{L}{R_S} * \frac{dI_{OFF}}{dt} + \frac{V_{OUT}}{R_S} + I_{OFF}\, dt$$

$T_{OFF}$ étant la durée d'une configuration de décharge.
Avantageusement, le circuit de régulation comprend en outre : un élément de remise à zéro de ladite autre capacité d'intégration.
Un mode de réalisation particulier prévoit que le circuit électronique d'interface est doté d'un redresseur. Ce redresseur est typiquement relié d'une part auxdites première et deuxième bornes dudit circuit électronique d'interface, et relié d'autre part à une borne du deuxième interrupteur.

**BRÈVE DESCRIPTION DES DESSINS**

La présente invention sera mieux comprise à la lecture de la description d'exemples de réalisation donnés, à titre purement indicatif et nullement limitatif, en faisant référence aux dessins annexés sur lesquels :

La figure 1 sert à illustrer une architecture de système de récupération d'énergie électromagnétique doté d'un circuit permettant de réaliser une conversion d'un signal vibratoire en sortie d'un récupérateur et pour fournir un signal DC à un étage de charge ;

La figure 2 sert à illustrer un exemple de réalisation particulier d'un circuit électronique d'interface entre un étage de récupération d'énergie et un moyen de stockage d'énergie, le circuit électronique d'interface étant conçu de sorte à pouvoir, lors de ses phases de fonctionnement alternant configuration de charge puis de décharge, réguler la durée de configurations de décharge de sorte à ajuster son impédance d'entrée moyenne sur un intervalle de temps donné sur une valeur optimale ;

La figure 3 sert à illustrer un premier exemple de circuit de régulation pour permettre la régulation de la durée de configurations de décharge en fonction d'une valeur optimale prédéterminée d'impédance d'entrée du circuit d'interface ;

La figure 4 sert à illustrer une séquence de signaux mis en œuvre au sein d'un bloc de contrôle logique du circuit électronique d'interface et d'un bloc générateur comprenant le premier exemple de circuit de régulation ;

La figure 5 sert à illustrer une variante de réalisation du circuit de régulation permettant de tenir compte du démarrage d'un étage dérivateur ;

La figure 6 sert à illustrer une séquence de signaux au sein d'un bloc de contrôle logique du circuit électronique d'interface adapté pour cette variante ;

La figure 7 sert à illustrer un exemple de réalisation particulier d'un circuit électronique d'interface entre un étage de récupération d'énergie et un moyen de stockage d'énergie, le circuit électronique d'interface étant conçu de sorte à pouvoir, lors de ses phases de fonctionnement alternant configuration de charge puis de décharge, réguler la durée de configurations de charge, de sorte à ajuster son impédance d'entrée moyenne sur une valeur optimale°;

La figure 8 sert à illustrer un autre exemple de circuit de régulation pour permettre la régulation de la durée de configurations de charge ;

La figure 9 sert à illustrer les performances en termes de rendement d'un circuit d'interface tel que mis en œuvre suivant l'invention ;

La figure 10 sert à illustrer les performances en termes de puissance d'un circuit d'interface tel que mis en œuvre suivant l'invention ;

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

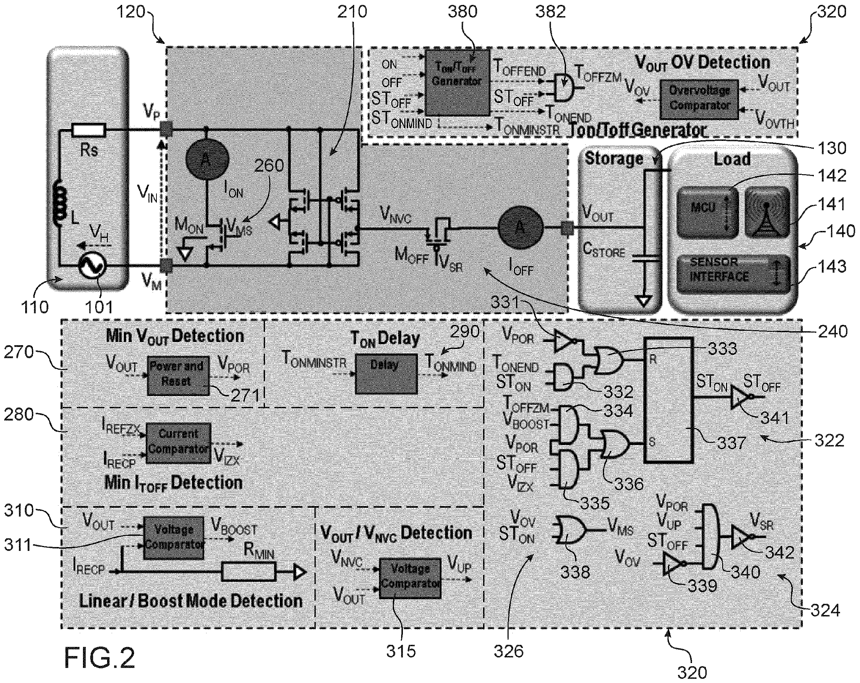

Un circuit électronique d'interface pour système autonome en énergie électrique et tel que mis en œuvre suivant un mode de réalisation de la présente invention va à présent être décrit en liaison avec les figures 2, 3 et 4.

Le système comprend un étage 110 de récupération d'énergie qui comporte une inductance et est destiné à produire un signal électrique vibratoire résultant d'une conversion d'énergie. Typiquement la conversion d'énergie fait suite à une excitation mécanique, mais l'étage 110 de récupération d'énergie peut être en variante adapté à une récupération d'un autre type d'énergie telle qu'une énergie solaire, électromagnétique ou thermique.

Un circuit électrique équivalent de l'étage 110 de récupération d'énergie est représenté de manière schématique sur la figure 2 avec un générateur de tension 101 délivrant une tension Vh, une inductance L et une résistance de sortie Rs en série. L'inductance L, et la résistance de sortie Rs sont des paramètres qui dépendent du récupérateur utilisé et qui sont typiquement connus lors de la conception du circuit électronique d'interface.

Le signal électrique alternatif produit par cet étage 110 est transmis aux bornes P, M d'entrée d'un circuit électronique d'interface 120 configuré pour convertir ce signal alternatif en une tension de sortie DC $V_{OUT}$, exploitable par un étage de charge 130-140.

L'étage de charge 130-140 est en particulier doté d'un moyen 130 de stockage d'énergie électrique. Dans l'exemple illustré, le moyen 130 de stockage d'énergie électrique comprend une capacité $C_{STORE}$. Une batterie peut être également prévue pour réaliser ce stockage. Dans l'exemple de réalisation illustré, le moyen 130 de stockage d'énergie électrique est associé à un autre bloc 140 typiquement doté d'un émetteur RF 141. Le bloc 140 peut être également pourvu d'autres éléments tels que par exemple un microcontrôleur 142, un circuit d'interface capteur 143 pour acquérir, au moyen de capteurs dédiés, des informations de l'environnement telles que par exemple la température, la pression.

La forme du signal délivré par l'étage 110 de récupération d'énergie en termes de fréquence et d'amplitude reflète celle de l'excitation. Le signal alternatif en entrée du circuit d'interface 120 est ainsi typiquement formé d'une succession d'oscillations, qui peuvent éventuellement être d'amplitudes décroissantes dans le cas particulier où la source d'énergie à l'origine de la création des oscillations est intermittente. Le circuit électronique d'interface 120 peut, selon un aspect particulier, s'adapter à des applications pour lesquelles l'amplitude du signal délivré par l'étage 110 est aléatoire avec des amplitudes d'oscillations qui sont susceptibles de varier d'une utilisation à l'autre. Ce peut être le cas par exemple pour une application de type « choc » où la conversion d'énergie fait suite à une variation brusque et soudaine ou bien dans le cas où la conversion résulte d'une excitation continue comportant des accélérations qui varient d'une alternance à l'autre à la fréquence propre du récupérateur.

Le circuit électronique 120 d'interface est typiquement mis en œuvre sous forme d'un ASIC (pour « Application-Specific Integrated Circuit » ou « circuit intégré propre à une application »), doté de différents blocs fonctionnels tels qu'illustrés de manière schématique sur l'exemple de réalisation donné sur la figure 2.

Le circuit électronique d'interface 120 comprend tout d'abord un étage formant un convertisseur. Le convertisseur peut être en particulier un redresseur ou convertisseur AC-DC, typiquement un redresseur 210 de type pont de Graetz connecté aux bornes P et M en sortie du premier étage 110, et réalisé ici par un agencement en pont de quatre transistors. Selon cet exemple de réalisation particulier illustré, le redresseur comporte 2 transistors à enrichissement, respectivement de type N et de type P, dotés d'une grille connectée à la borne M et un drain connecté à la borne P, tandis que deux autres transistors à enrichissement, respectivement de type N et de type P comportent une grille connectée à la borne P et un drain connecté à la borne M.

Le circuit électronique 120 d'interface est ici avantageusement dépourvu d'inductance entre la sortie de l'étage de récupération 110 et le moyen de stockage 130, ce qui lui permet d'être moins encombrant et moins couteux qu'un circuit d'interface faisant appel à un tel composant.

Le circuit électronique 120 d'interface comporte un interrupteur 260 dit « de charge », agencé entre la première borne P et la deuxième borne M et apte à alternativement connecter ou déconnecter la première borne P et la deuxième borne M l'une de l'autre, de façon à les court-circuiter. L'interrupteur 260 de charge est typiquement doté ou formé d'un transistor $M_{ON}$, que l'on rend alternativement passant ou bloqué en fonction du niveau d'un signal de commande $V_{MS}$ appliqué sur sa grille. Dans l'exemple de réalisation illustré, le transistor $M_{ON}$ est un transistor de type N. Le signal de commande $V_{MS}$ peut être en particulier un signal logique produit par un étage 326 d'un bloc de contrôle 320 logique appartenant au circuit d'interface 120.

Le circuit électronique 120 d'interface est également doté d'un interrupteur 240 dit « de décharge » apte à alternativement connecter ou déconnecter la sortie du redresseur 210 du moyen 130 de stockage de charges. L'interrupteur 240 « de décharge » est typiquement doté ou formé d'un transistor $M_{OFF}$ qui est rendu alternativement passant ou bloqué en fonction du niveau d'un deuxième signal de commande $V_{SR}$ appliqué sur sa grille. Le transistor 241 peut être par exemple un transistor à enrichissement de type P. Le deuxième signal de commande $V_{SR}$ est ici produit par un étage 324 du bloc de contrôle 320 logique.

Le circuit électronique 120 d'interface est susceptible d'alterner entre une configuration de charge et une configuration de décharge. La configuration de charge est une configuration des interrupteurs 240, 260 de sorte à déconnecter la sortie du redresseur de l'étage de charge 130-140 et qu'un courant de charge $I_{ON}$, destiné à être détecté, circule entre la première borne P et la deuxième borne M. La configuration de décharge étant une configuration des interrupteurs 260, 240, de sorte que la borne P et la borne M sont déconnectées entre elles et la sortie dudit redresseur 210 connectée à l'étage de charge 130-140 reçoit un courant de décharge $I_{OFF}$ circulant à travers l'interrupteur 240 entre la borne P ou M et la sortie du redresseur 210 relié à l'étage 130-140 de charge.

Les signaux de commande $V_{MS}$, $V_{SR}$ produits par le bloc de contrôle 320 sont typiquement des signaux logiques dont les états respectifs dépendent de ceux d'un signal $ST_{ON}$ indicateur de configuration de charge produit par ledit bloc de contrôle logique 320 et d'un autre signal $ST_{OFF}$ indicateur de configuration de décharge également produit par ledit bloc de contrôle logique 320 et complémentaire du signal $ST_{ON}$.

Notamment dans un mode de fonctionnement particulier dit de « BOOST », le circuit électronique d'interface 120 est susceptible d'adopter une succession de phases durant lesquelles il alterne plusieurs fois entre la configuration de charge des interrupteurs 240, 260 et la configuration de décharge des interrupteurs 240, 260.

La durée de la configuration de charge et/ou de décharge est ajustée d'une phase à l'autre de manière à obtenir un rendement d'extraction $\eta_e$ amélioré. Le circuit d'interface 120 mis en œuvre peut permettre d'atteindre un rendement total $\eta_T$ de puissance ($\eta_T = \eta_e * \eta_c$, avec $\eta_e$ le rendement d'extraction, $\eta_c$ le rendement de conversion) qui peut être supérieur à 90%, et ce, sur une large gamme de signaux d'entrée. Cet ajustement de la durée de la configuration de charge et/ou de décharge peut être réalisée notamment à l'aide d'un bloc générateur 380 configuré pour émettre des signaux $T_{ONEND}$, $T_{OFFEND}$, aptes respectivement à indiquer la fin d'une configuration de charge et la fin d'une configuration de décharge et de modifier l'état des signaux $ST_{ON}$, $ST_{OFF}$ utilisés par le bloc de contrôle 320.

Dans cet exemple de réalisation particulier, le changement de configuration d'une configuration de décharge à une configuration de charge peut être déclenché par un signal $T_{OFFZM}$ de détection d'impédance d'entrée optimale.

L'état du signal de détection d'impédance d'entrée optimale $T_{OFFZM}$ dépend lui-même de celui du signal $T_{OFFEND}$ produit par un circuit de régulation (non représenté sur la figure 2) appartenant au bloc générateur 380 et de celui du signal $ST_{OFF}$ indicateur de configuration de décharge.

Le circuit de régulation du bloc générateur 380 vise à mettre en œuvre un asservissement de l'impédance

d'entrée $R_{in}$ du circuit d'interface 120 à une valeur optimale $R_{opt}$ correspondant au point maximal de puissance extraite MPP (pour « Maximum Power Point tracking »). Typiquement, la valeur optimale $R_{opt}$ est égal à Ks*Rs avec Ks un coefficient de couplage prédéfini qui dépend du type de récupérateur utilisé. Le circuit de régulation met ici plus précisément en œuvre un asservissement d'un ensemble de signaux représentatifs d'une valeur moyenne d'impédance d'entrée du circuit d'interface $\overline{Zin}$ à une valeur d'impédance optimale prédéterminée Ropt.

Cette impédance d'entrée moyenne $\overline{Zin}$ peut être exprimée par l'équation (1) ci-dessous, qui dépend de valeurs de courant moyen $\overline{Ih}$ traversant le récupérateur et entrant/sortant des bornes P et M, ainsi que de la tension moyenne $\overline{Vh}$ aux bornes de la source de tension équivalente interne 101 du récupérateur et de l'impédance Zh aux bornes de la source de tension 101.

$$\frac{\overline{Vh}}{\overline{Ih}} = \overline{Zh} = Zs + \overline{Zin} = Rs + \overline{Rin} \tag{1}$$

Dans le cas où la fréquence de variation du courant Ih est relativement élevée, la composante Lω est en pratique négligeable et on peut considérer par simplification que l'impédance Zs est sensiblement égale à Rs. De même, l'impédance d'entrée Zin du circuit d'interface peut être considérée comme quasiment uniquement résistive et l'équation (1) peut être simplifiée.

Le courant moyen $\overline{Ih}$ et la tension moyenne $\overline{Vh}$ peuvent, selon une première possibilité de mise en œuvre, être exprimés par le biais des équations (2) et (3) suivantes :

$$\overline{Ih} * T = \int_0^T T_{ON} * I_{ON} + T_{OFF} * I_{OFF}\, dt \tag{2}$$

$$\overline{Vh} * T_{ON} = R_S \int_0^{T_{ON}} \frac{L}{R_S} * \frac{dI_{ON}}{dt} + I_{ON}\, dt \tag{3}$$

$$\overline{Vh} * T = \overline{(Vh * T_{ON})} * \frac{T}{T_{ON}} \tag{3'}$$

avec $T_{ON}$ et $T_{OFF}$ correspondant à des durées pour lesquelles les interrupteurs de charge 260 et de décharge 240 sont respectivement conducteurs et conduisent des courants respectifs $I_{ON}$ et $I_{OFF}$. On notera que $I_H$ est alors respectivement égal à $I_{ON}$ ou $I_{OFF}$ selon que l'un ou l'autre des interrupteurs 260 ou 240 est conducteur. T correspond à une période d'alternance de conduction des interrupteurs 260 et 240. On note que dans l'équation (3) on calcule une moyenne de la valeur de tension Vh uniquement sur une période $T_{ON}$ à partir du courant $I_{ON}$ car cela permet de simplifier le schéma électrique, en évitant d'avoir à tenir compte de la valeur de la tension de sortie $V_{OUT}$ du circuit de régulation. Pour calculer une tension moyenne sur la période T, on considère ici que la valeur moyenne calculée sur une période $T_{ON}$ est égale à celle qui serait obtenue sur une période $T = T_{ON} + T_{OFF}$.

Pour établir l'asservissement de l'impédance $\overline{Zh}$ ou de $\overline{Zin}$ les deux termes étant liés par une constante égale à la valeur de la résistance Rs, le circuit électronique de régulation évoqué précédemment produit des signaux qui dépendent d'une part de la tension moyenne $\overline{Vh}$ sur un intervalle de temps donné et d'autre part d'un courant moyen $\overline{Ih}$ du récupérateur sur ledit intervalle de temps donné. On notera que le courant Ih est accessible par mesure car sortant/entrant du récupérateur, contrairement à la tension Vh qui elle est interne au récupérateur et ne peut être directement mesurée. En s'appuyant sur les équations susmentionnées, la tension Vh va être estimée (en moyenne) à partir du courant Ih.

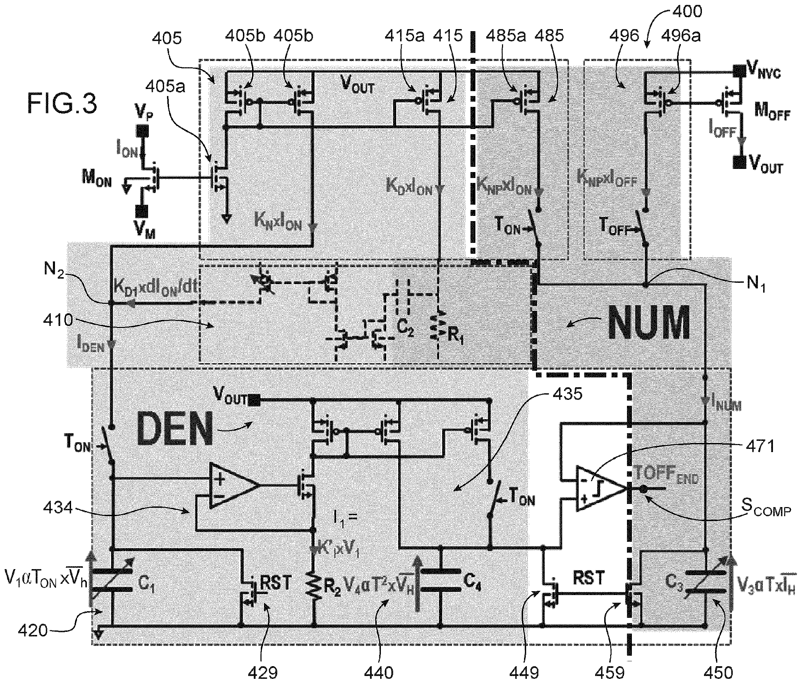

Un premier exemple de réalisation du circuit de régulation 400 correspondant à la manière indiquée plus haut (en lien avec les équations (2) et (3)) d'évaluer le courant moyen $\overline{Ih}$ et la tension moyenne $\overline{Vh}$ est donné sur la figure 3.

Avec un circuit de régulation tel que décrit ci-après, les durées respectives $T_{ON}$, $T_{OFF}$ de configurations de

8

charge et de décharge sont ajustées en suivant l'approximation donnée par l'équation suivante (4), avec $T = T_{ON} + T_{OFF}$ :

$$\frac{\overline{Vh} * T^2}{\overline{Ih} * T} = \overline{Zh} * T = Zhopt * T = Rs(Ks + 1) * T$$

$$\frac{\overline{Vh} * T^2}{\overline{Ih} * T} * \frac{1}{Rs(Ks+1)} = T = TON + TOFF = \frac{NUM}{DEN} * T \qquad (4)$$

où NUM est une valeur évaluée à partir d'une partie notée NUM du circuit de régulation 400 comprenant des étages 485, 496 et 450, où DEN est une valeur évaluée à partir d'une partie DEN du circuit comprenant des étages 405, 415, 420, 440. Autrement dit, on cherche à réaliser un asservissement de l'impédance Zh à une valeur optimale Zhopt, ce qui revient à asservir Rin à une valeur optimale Ropt. Pour cela, on cherche typiquement à obtenir un ratio NUM/DEN égal à 1, c'est-à-dire en essayant d'égaliser une tension V4 permettant d'évaluer le terme DEN donné plus haut et la tension V3 permettant d'évaluer le terme NUM.

Le circuit de régulation 400 est, dans cet exemple, doté d'étages 405, 415, 485, de recopie de courant de charge $I_{ON}$, ainsi que d'un étage 496 de recopie de courant de décharge $I_{OFF}$. Le circuit de régulation 400 est également pourvu d'étages intégrateurs 420, 440, 450 de courant. Un étage dérivateur 410 de courant et en particulier d'une copie $K_D * I_{ON}$ du courant $I_{ON}$ peut être également prévu.

Pour asservir l'impédance d'entrée $\overline{Z}in$, le circuit de régulation 400 produit des signaux $V_1$, $V_4$ qui dépendent respectivement d'un produit $(\overline{Vh}) * T_{ON}$ et d'un produit $(\overline{Vh}) * T^2$ et qui sont ainsi représentatifs de valeur de tension moyenne $\overline{Vh}$ pendant un intervalle de temps. La tension moyenne $\overline{Vh}$ est extraite dans cet exemple, conformément à l'équation (3') à l'aide de recopies de courant de charge $I_{ON}$. Le circuit de régulation produit également un signal $V_3$ qui dépend du produit $(\overline{Ih}) * T$ et ainsi représentatif d'une valeur de courant moyen $(\overline{Ih})$ pendant l'intervalle de temps T. Ce courant moyen $\overline{Ih}$ est extrait dans cet exemple conformément à l'équation (2) à l'aide d'une recopie du courant de charge $I_{ON}$ et d'une recopie du courant de charge $I_{OFF}$.

Le signal $V_3$ est une tension prise aux bornes d'une capacité d'intégration $C_3$ d'un étage 450 d'intégration de courant. La capacité d'intégration $C_3$ se charge à partir d'un courant dit « de numérateur » $I_{NUM}$ dans cet exemple égal à la somme d'un courant $K_{NP} * I_{ON}$ copie du courant de charge $I_{ON}$ pendant la durée $T_{ON}$ d'une configuration de charge et d'un autre courant $K_{NP} * I_{OFF}$ résultant d'une copie du courant de décharge $I_{OFF}$ pendant la durée $T_{OFF}$ d'une configuration de décharge. Le courant $K_{NP} * I_{ON}$ est issu d'un étage 485 de copie du courant $I_{ON}$ traversant l'interrupteur de charge et qui peut être doté d'au moins un transistor 485a monté en miroir de courant avec le transistor de charge $M_{ON}$. Le courant $K_{NP} * I_{OFF}$ peut être issu d'un étage 496 de copie du courant $I_{OFF}$ traversant l'interrupteur de décharge et qui peut être doté d'un transistor 496a monté en miroir de courant avec le transistor $M_{OFF}$ de décharge.

Une branche de circuit produisant le courant de numérateur $I_{NUM}$ est connectée à un nœud $N_1$ lui-même couplé alternativement avec l'étage 485 pendant une configuration de charge et avec l'étage 496 pendant une configuration de décharge.

La tension $V_1$ est prise aux bornes d'une capacité d'intégration $C_1$ d'un étage 420 d'intégration de courant. La capacité d'intégration $C_1$ se charge à partir d'un courant dit « de dénominateur » $I_{DEN}$ composé d'un courant $K_N * I_{ON}$ copie du courant de charge $I_{ON}$ et d'un autre courant $K_{D1} * dI_{ON}/dt$ produit par un étage 410 dérivateur à partir d'un courant $K_D * I_{oN}$ émis en entrée de cet étage 410 dérivateur et lui-même résultant d'une copie du courant de charge $I_{ON}$. Dans cet exemple, l'étage 410 dérivateur est représenté de manière schématique par une résistance $R_1$ et une capacité $C_2$.

Le courant $K_{NP} * I_{ON}$ est issu d'un étage 405 de copie du courant $I_{ON}$ qui peut être formé de transistors 405a, 405b, 405c, 405d montés en miroir de courant avec le transistor $M_{ON}$ de charge. Le courant $K_D * I_{ON}$ est, quant à lui, issu d'un étage 415 qui peut être doté d'un transistor 415a monté en miroir de courant.

La capacité $C_1$ d'intégration est couplée à un étage 434a réalisant un convertisseur tension-courant formé dans cet exemple à l'aide d'un amplificateur 434a. L'étage 434 de conversion tension-courant permet de produire un courant $I_1 = K'_1 V_1$ proportionnel à la tension $V_1$.

Une copie du courant $I_1$ est produite par un étage 435 de recopie de courant et permet de charger la capacité $C_4$ d'un étage 440 d'intégration et faire évoluer la tension $V_4$ aux bornes de cette capacité $C_4$. On notera en pratique, que l'étage 435 dispose de deux branches de recopie déversant du courant dans la capacité $C_4$. Une des branches est activée pendant l'intégralité d'une période T (de durée $T_{ON} + T_{OFF}$, en pratique entre deux réinitialisations ou vidages des capacités) et l'autre branche est activée uniquement durant la période $T_{ON}$. Cette autre branche est prévue pour pallier le régime transitoire d'établissement de la tension $V_1$ en effectuant une multiplication par 2 du courant chargeant la capacité $C_4$, ce pendant la durée $T_{ON}$.

Une comparaison entre la tension $V_4$ et la tension $V_3$ est réalisée par le biais d'un comparateur 471 qui est apte à produire en sortie, en fonction de cette comparaison, le signal indicateur $T_{OFFEND}$. On notera que la sortie du comparateur 471 donne une évaluation du ratio NUM/DEN indiqué plus haut dans l'équation (4). Ainsi, en observant la sortie de ce comparateur 471 on peut évaluer si l'impédance moyenne d'entrée du circuit d'interface est supérieure ou inférieure à la valeur optimale. Si la valeur de NUM est supérieure à celle de DEN, l'impédance d'entrée Zin est supérieure à Zopt et inversement.

La durée d'une configuration de charge $T_{ON}$ est ici un multiple d'une période minimale prédéterminée $T_{ONMIN}$, qui est programmable et prévue par exemple pour une application particulière entre 8 $\mu$s et 50 $\mu$s. Pour cela, le circuit d'interface illustré sur la figure 2 peut être pourvu d'un bloc 290 de retard indicateur d'écoulement de durée minimale de configuration de charge qui, après réception d'un signal de démarrage de configuration de charge $T_{ONMINSTR}$, génère après un délai fixé et programmé, un signal $T_{ONMIND}$ indicateur d'écoulement de durée minimale de configuration de charge à destination du bloc générateur 380.

Lorsque qu'une configuration de charge de l'inductance du récupérateur démarre, que l'interrupteur de charge 260 est fermé ($M_{ON}$ à l'état 'ON', i.e. passant) et que l'interrupteur de décharge 240 est ouvert ($M_{OFF}$ à l'état 'OFF', i.e. bloqué), les capacités d'intégration $C_4$ et $C_3$ se chargent à partir de courants respectifs issus de recopies d'un courant $I_{ON}$ du transistor $M_{ON}$ de charge pendant une première période $T_{ONMIN}$. La tension $V_4$ aux bornes de $C_4$ et la tension $V_3$ aux bornes de $C_3$ sont alors comparées par le biais du comparateur 471.

Si la tension $V_4$ est supérieure à la tension $V_3$, le comparateur 471 produit en sortie $S_{COMP}$ un signal par exemple correspondant à un état '1' logique. L'état de cette sortie $S_{COMP}$ qui dépend de la différence $V_4 - V_3$ est détecté et renseigne sur une valeur de résistance d'entrée régulée par rapport à une consigne Ropt. Dans cet exemple, un état '1' en sortie $S_{COMP}$ du comparateur 471, à l'instant où la période $T_{ONMIN}$ s'est écoulée, signifie que la valeur d'impédance d'entrée est trop élevée par rapport à la valeur Ropt. Une phase de décharge qui aurait tendance à augmenter d'avantage cette impédance d'entrée n'est donc pas déclenchée. Le circuit d'interface est alors maintenu dans une configuration de charge.

Dans ce cas de figure (où Zin évaluée > Zopt après une durée $T_{ONMIN}$), à l'issue de la période $T_{ONMIN}$, les capacités $C_3$, $C_4$, $C_1$ d'intégration sont vidées respectivement par le biais d'étages 459, 449, 429 de remise à zéro. Ces étages 459, 449, 429 de remise à zéro sont typiquement formés d'un transistor connecté aux bornes de la capacité d'intégration $C_3$, $C_4$, $C_1$ et dont la grille est commandée par un signal RST de remise à zéro. Dans l'exemple illustré la remise à zéro est effectuée lorsque le signal RST est mis à une valeur correspond à un '1' logique.

La configuration de charge se prolonge alors d'une nouvelle période minimale $T_{ONmin}$. Si, à l'issue de cette durée, la tension $V_4$ est inférieure à la tension $V_3$, le comparateur 471 produit en sortie $S_{COMP}$ un signal dans cet exemple correspondant à un état logique '0' amené à déclencher un passage dans une configuration de décharge. Le générateur 380 produit alors un signal $T_{ONEND}$ à destination du bloc de contrôle 320.

La configuration de décharge où l'interrupteur 260 est alors ouvert ($M_{ON}$ à l'état 'OFF', i.e. bloqué) et l'interrupteur 240 est fermé ($M_{OFF}$ à l'état 'ON', i.e. passant), entraine une diminution du courant $I_H$ dans l'inductance L du récupérateur.

Dans la configuration de décharge, lorsque la tension $V_4$ atteint et dépasse la valeur de la tension $V_3$, le comparateur 471 produit en sortie un signal indicateur $T_{OFFend}$ de fin de configuration de décharge qui bascule dans un état correspondant dans cet exemple à un état logique '1'. Ce signal $T_{OFFend}$ en sortie du comparateur 471 permet de modifier le signal $T_{OFFZM}$ indicateur d'impédance moyenne d'entrée optimale et indiquer au bloc de contrôle 320 que la configuration de décharge se termine. L'impédance moyenne d'entrée est alors égale à la valeur Ropt pour un intervalle de temps de durée $T=T_{ON}min+T_{OFF}$.

Par le biais d'une détection de la différence entre la tension $V_4$ et la tension $V_3$, on détecte alors qu'un rapport entre la tension moyenne $\overline{Vh}$ et le courant moyen $\overline{Ih}$ sur un intervalle de temps donné atteint la valeur optimale Ropt prédéterminée.

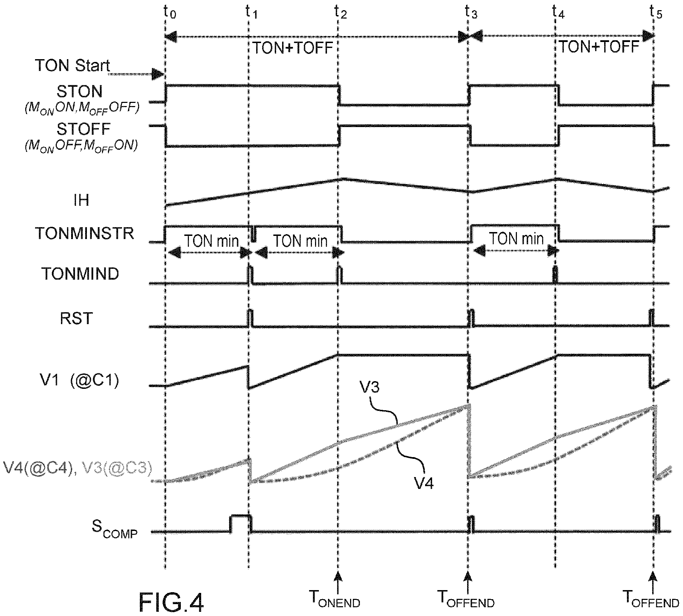

Un exemple de séquencement de signaux $ST_{ON}$, $ST_{OFF}$, $T_{ONMINSTR}$, $T_{ONMIND}$, utilisés par le bloc générateur 380 du signal $T_{OFFEND}$ produit par ce bloc 380 générateur et de signaux $V_1$, $V_3$, $V_4$, $S_{COMP}$ produits par le circuit de régulation sont donnés sur la figure 4.

A un instant $t_0$, une nouvelle configuration de charge démarre, ce qui se traduit par une mise à un état '1' du signal indicateur $ST_{ON}$ de configuration de charge. Le courant $I_H$ dans l'inductance du récupérateur augmente alors. La tension $V_4$ devient supérieure à la tension $V_3$, ce qui entraine un changement d'état du signal produit en sortie $S_{COMP}$ du comparateur 471 qui bascule ici à un état '1'. A un instant $t_1$ de détection après l'écoulement d'une période minimale $T_{ONmin}$ de la configuration de charge, l'état '1' du signal $T_{OFFEND}$ signifie que l'impédance moyenne vue par le récupérateur est supérieure à une valeur Ropt de consigne. A l'instant $t_1$, le vidage des capacités d'intégration est déclenché. A partir de cet instant $t_1$, la configuration de charge est alors poursuivie pendant au moins une nouvelle période minimale $T_{ONmin}$. Une nouvelle intégration de courant est ainsi réalisée au niveau des capacités $C_1$, $C_3$, $C_4$.

A un instant $t_2$ une fois qu'une nouvelle période $T_{ONmin}$ s'est écoulée, la tension $V_4$ aux bornes de la capacité $C_4$ est inférieure à la tension $V_3$ aux bornes de la capacité $C_3$, ce qui se traduit par une sortie $S_{COMP}$ du comparateur 471 à un état '0' signifiant qu'une configuration de décharge peut être cette fois effectuée entre les instants $t_2$ et $t_3$.

Ensuite, un basculement de la sortie $S_{COMP}$ du comparateur 471 à l'instant $t_3$ indique la fin de la configuration de décharge par le biais d'un changement d'état, à '1', de la sortie $S_{COMP}$ produisant le signal $T_{OFFEND}$. L'impédance moyenne d'entrée entre les instants $t_3$ et $t_1$ est alors égale à la valeur Ropt, et une nouvelle phase alternant une configuration de charge puis de décharge peut être mise en œuvre.

Pour déclencher une nouvelle phase (alternance d'une configuration de charge puis de décharge) à partir du signal $T_{OFFEND}$ produit en sortie du circuit de régulation 400, le bloc de contrôle 320 utilise un signal $T_{OFFZM}$ de détection d'impédance moyenne d'entrée optimale produit par le biais d'un étage 382. Cet étage 382 est agencé en sortie du bloc générateur 380 et reçoit également le signal $ST_{OFF}$ indicateur de configuration de décharge. L'étage 382 est doté d'au moins une porte logique, dans cet exemple une porte logique réalisant une fonction ET entre le signal $ST_{OFF}$ indicateur de configuration de décharge et le signal $T_{OFFEND}$ produit en sortie du comparateur.

Dans l'exemple de réalisation du circuit d'interface illustré sur la figure 2, le bloc 320 de contrôle logique est configuré pour modifier l'état du signal indicateur $ST_{ON}$ de configuration de charge et de l'autre signal indicateur $ST_{OFF}$, de configuration de décharge complémentaire de ce dernier, en fonction des états respectifs des entrées R et S d'une bascule 337. L'entrée RESET est ici dépendante des états respectifs du signal $ST_{ON}$ et d'un signal $T_{ONEND}$. Le signal $T_{ONEND}$ est produit par le générateur 380 lorsqu'on se trouve dans la configuration de charge, que $V_3>V_4$ (ce qui se traduit dans cet exemple par $S_{COMP}=0$), et qu'au moins une période minimale $T_{ONmin}$ prédéterminée s'est écoulée. L'entrée SET de la bascule 337 est quant à elle dépendante des états respectifs des signaux $ST_{OFF}$, $T_{OFFZM}$

Dans l'exemple de réalisation qui vient d'être décrit du bloc générateur 380 et du circuit de régulation 400 associé, la durée $T_{ON}$ des configurations de charge est ici le multiple d'une période minimale $T_{ONmin}$ prédéterminée, tandis que la durée $T_{OFF}$ des configurations de décharge est ici variable et a une fin indiquée uniquement par le basculement en sortie du comparateur 471, sans que cette fin dépende d'une durée minimale de configuration de décharge.

Des valeurs du coefficient de couplage $K_S$, d'inductance L, de résistance $R_s$ qui sont propres au récupérateur et qui déterminent une valeur de consigne $R_{opt}$, sont utilisées pour déterminer des paramètres du circuit de régulation 400. La période minimale prédéterminée $T_{ONmin}$ est également fixée en fonction du type de récupérateur utilisé.

Les paramètres de gain $K_{NP}$ des étages 485, 496 de copie de courant, $K_N$ de l'étage 405 de copie de courant, $K_D$ de l'étage 415 de copie de courant, $R_1$ et $C_2$ de l'étage dérivateur 410 de courant, $C_4$ de l'étage intégrateur $C_4$ sont définis lors de la conception du circuit de régulation 400 de préférence de sorte que :

$$C_1/C_3 = ((Ks+1)*T_{ONmin}*K_{NP})/(K_N*R_2*C_4) \text{ et } K_{D1} = (L*K_D)/(Rs*K_N*R_1*C_2)$$

Une variante de réalisation du bloc générateur du signal $T_{OFFend}$ et de son circuit de régulation associé peut être prévue pour permettre de tenir compte du temps de démarrage de l'étage dérivateur 410 lorsque l'on réalise l'asservissement.

On met cette fois en œuvre un asservissement de l'impédance d'entrée moyenne $\overline{Zh}$ sur la base des équations (1), (3) telles que données précédemment, et de l'équation (2)' ci-dessous remplaçant l'équation (2) du premier exemple de réalisation.

$$\overline{Ih} * T = \int_0^T T_{ON} * (I_{ON} - \frac{1}{2} * T_{ON} * \frac{dI_{ON}}{dt}) + T_{OFF} * I_{OFF} \, dt$$

$$(2)'$$

Pour remédier au problème d'estimation du temps de démarrage de l'étage dérivateur 410, une configuration de charge est imposée durant une première période de durée minimale $T_{ONmin}$ pour permettre un démarrage et une polarisation adéquats de l'étage dérivateur 410, sans que la sortie du comparateur 471 ne soit utilisée pour évaluer où se situe la valeur de la résistance d'entrée par rapport à une valeur de consigne.

A la fin de cette première durée minimale $T_{ONmin}$ imposée, la sortie $S_{COMP}$ du comparateur 471 n'est donc pas prise en compte et quel que soit l'état du signal en sortie de ce comparateur 471, la configuration de charge est poursuivie pendant une nouvelle période de durée $T_{ONmin}$.

A l'issue de cette deuxième période $T_{ONMIN}$, la sortie $S_{COMP}$ du comparateur 471 est cette fois-ci prise en compte, l'état du signal en sortie indiquant si la configuration de charge est maintenue selon une autre période égale à $T_{ONmin}$ ou bien si le circuit d'interface doit être mis dans une configuration de décharge. Dans ce cas, le signal $T_{ONEND}$ est produit par le générateur 380 à destination du bloc de contrôle 320 qui déclenche le changement de configuration.

L'équation (2)' donnée plus haut et que l'on estime à partir de la tension $V_3$ qui se charge à partir du courant $I_{NUM}$ inclut cette fois un nouveau terme : $(1/2*T_{ON}*(dI_{ON}/dt))$. L'inclusion de ce nouveau terme a pour fonction d'assurer que l'on mesure ici bien un courant Ih moyen qui est celui de la période comprise entre t0 et t3, et que lorsque l'on enchaîne les phases de fonctionnement (une phase ayant une durée égale à au moins une période de charge $T_{ON}$ à laquelle on ajoute une période de décharge TOFF) que l'on réalise bien une évaluation du courant moyen sans omettre une valeur de Ih pendant le premier intervalle de temps $T_{ONmin}$ situé entre t0 et t1.

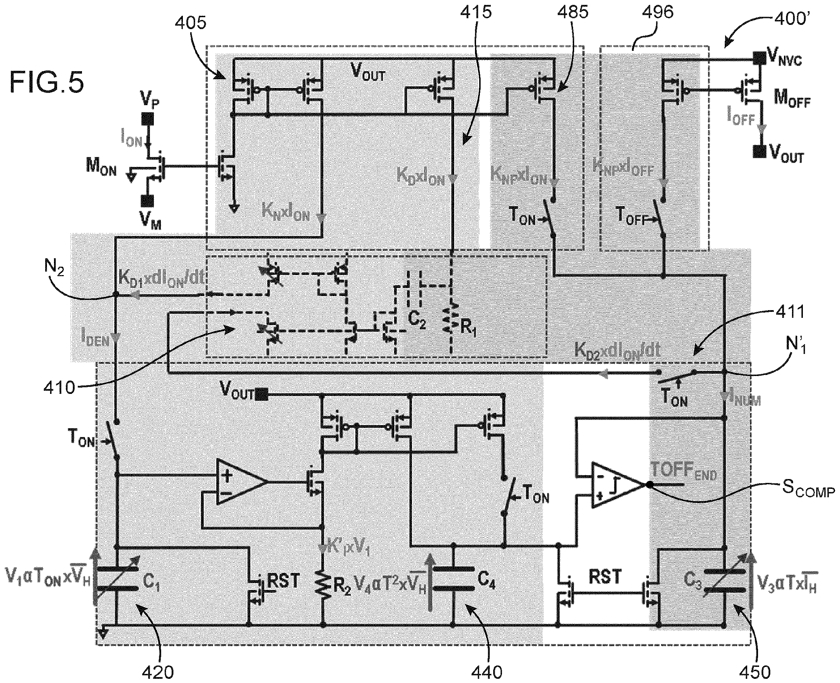

La figure 5 illustre un exemple d'architecture de circuit de régulation pour la mise en œuvre d'une telle variante. Une branche supplémentaire 411 connectée à l'étage intégrateur 410 est cette fois prévue. Cette branche 411 est, pendant une période d'une configuration de charge, apte à être couplée au nœud N'$_1$ auquel la branche produisant le courant de numérateur $I_{NUM}$ est connectée. On soustrait ainsi au courant de numérateur $I_{NUM}$ une nouvelle composante $(Kd_2*(dIon/dt))$. Le nouveau terme de l'équation (2)' est ainsi pris en compte dans le signal $V_3$ résultant de l'intégration du courant $I_{NUM}$ de numérateur.

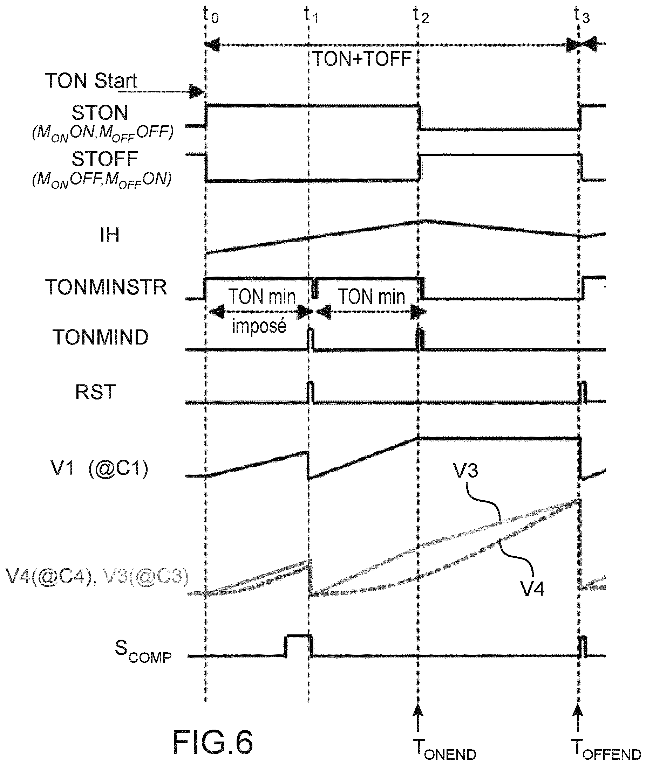

Une séquence de signaux utilisés et/ou produits par le bloc générateur 380 et le circuit de régulation correspondant à cette variante de réalisation est donnée sur la figure 6.

A un instant $t_1$ après l'écoulement de la période minimale $T_{ONmin}$ imposée, la sortie $S_{COMP}$ du comparateur 471 indiquant le résultat de la comparaison entre les signaux $V_3$ et $V_4$ n'est pas prise en compte et la configuration de charge se poursuit alors durant une nouvelle période $T_{ONmin}$ jusqu'à un instant $t_2$. A cet instant $t_2$, la sortie $S_{COMP}$ du comparateur 471 est dans un état par exemple '0' indiquant que $V_4<V_3$. Une détection de cet état a pour conséquence, comme dans l'exemple de réalisation précédent, de déclencher un changement de configuration de sorte que le circuit passe dans une configuration de décharge. Cette configuration est maintenue ensuite jusqu'au un instant $t_3$ où un changement d'état en sortie du comparateur 471 par exemple qui passe à un niveau '1' indiquant que $V_4>V_3$, est détecté et marque l'arrêt de la configuration de décharge et le passage dans une autre phase démarrant par une configuration de charge.

On notera que dans les exemples de réalisation précédemment décrits, on réinitialise les capacités $C_1$, $C_4$ et $C_3$, via le signal RST, avant de relancer une nouvelle période $T_{ONMIN}$. De la sorte, la durée T utilisée dans les formules indiquées précédemment correspond au cumul d'une durée $T_{ON}=T_{ONMIN}$ et d'une durée $T_{OFF}$. Autrement dit, si la durée $T_{ON}$ était prise égale à un nombre supérieur à 1 de période $T_{ONMIN}$, pour tenir compte d'une logique de contrôle et d'une implémentation différente de celles décrites, en n'imposant pas une réinitialisation via le signal RST avant toute nouvelle période de $T_{ONMIN}$, les équations devraient être adaptées en conséquence.

Dans les exemples de réalisation précédemment décrits, on prévoit des configurations de charge d'une durée égale à un multiple d'une durée minimale prédéterminée et programmée au sein du circuit électronique d'interface, tandis que la durée des configurations de décharge est modulable de manière plus précise en fonction de l'instant où l'on atteint une valeur de consigne.

Il est en variante possible de réaliser l'asservissement de l'impédance moyenne $\overline{Zh}$ en ayant cette fois des configurations de décharge d'une durée égale à un multiple d'une durée minimale prédéterminée, tandis que la durée des configurations de charge est ajustée de manière plus fine et dure le temps nécessaire pour que le circuit de régulation atteigne une valeur de consigne correspondant à une détection par le comparateur 471 d'une condition sur la différence entre les signaux $V_4$ et $V_3$.

Pour cette variante, le courant moyen $\overline{Ih}$ et la tension moyenne $\overline{Vh}$ sont cette fois évaluées par le biais de signaux représentatifs des équations (3) et (4) suivantes.

$$\overline{I_H}T= \int_0^T T_{ON}I_{ON} + T_{OFF}I_{OFF}\,dt \qquad (3)$$

$$\overline{Vh}*T_{OFF} = R_S \int_0^{T_{OFF}} \frac{L}{R_S}*\frac{dI_{OFF}}{dt} + \frac{V_{OUT}}{R_S} + I_{OFF}\,dt$$

$$(4)$$

$$\overline{Vh}*T = \overline{(Vh*T_{OFF})}*\frac{T}{T_{OFF}} \qquad (4')$$

Le courant Ih est ainsi exprimé d'une manière similaire à ce qui a été décrit précédemment.

On moyenne cette fois ci la tension Vh du récupérateur sur un temps de décharge $T_{OFF}$. Un terme de l'équation (4) dépend de la tension de sortie $V_{OUT}$ du circuit d'interface autrement dit aux bornes de l'élément de stockage et requiert l'introduction d'un étage supplémentaire dans le circuit de régulation par rapport aux exemples de réalisation décrits précédemment. Cet étage supplémentaire est typiquement doté d'un convertisseur tension-courant et est configuré pour produire un courant image de la tension de sortie $V_{OUT}$ du circuit d'interface.

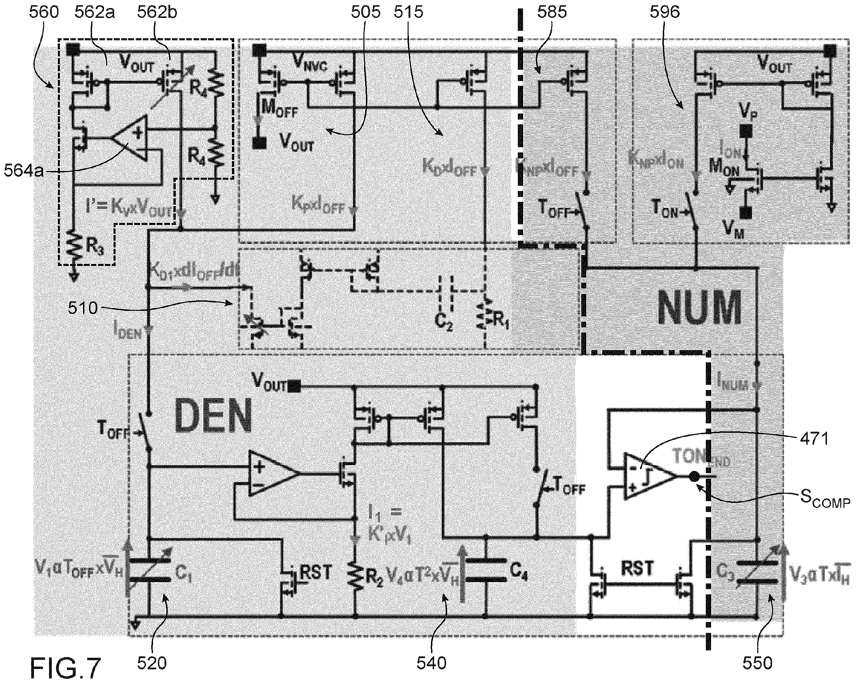

Un exemple de réalisation du circuit de régulation 500 associé à cette variante est donné sur la figure 7.

Le circuit de régulation 500 est dans cet exemple doté d'étages 505, 515, 585, de recopie de courant de décharge $I_{OFF}$, et d'un étage 596 de recopie de courant de charge $I_{ON}$. Le circuit de régulation 500 est également pourvu d'étages intégrateurs 520, 540, 550 de courant ainsi que d'un étage dérivateur 510 de courant, et en particulier pour produire un courant image d'une dérivée d'une copie du courant de décharge $I_{OFF}$.

Le courant moyen $\overline{Ih}$ est extrait dans cet exemple, conformément à l'équation (3) par le biais de la capacité d'intégration $C_3$ qui se charge à partir du courant dit « de numérateur » $I_{NUM}$ égal à la somme d'un courant $K_{NP}*I_{ON}$ copie du courant de charge $I_{ON}$ pendant la durée $T_{ON}$ d'une configuration de charge et d'un autre courant $K_{NP}*I_{OFF}$ résultant d'une copie du courant de décharge $I_{OFF}$ pendant la durée $T_{OFF}$ d'une configuration de décharge. Le courant $K_{NP}*I_{ON}$ est issu d'un étage 596 de copie du courant $I_{ON}$. Le courant $K_{NP}*I_{OFF}$ peut être issu d'un étage 585 de copie du courant $I_{OFF}$.

La tension $V_1$ prise aux bornes de la capacité d'intégration $C_1$ dépend d'un courant de dénominateur $I''_{DEN}$ qui, dans cet exemple, est composé cette fois d'un courant $K_P*I_{OFF}$ en sortie de l'étage 505 de copie du courant de décharge $I_{OFF}$, d'un autre courant $K_{D1}*dI_{OFF}/dt$ en sortie de l'étage 510 dérivateur, et d'un courant $I''=K_V*V_{OUT}$ en sortie d'un étage 560 convertisseur tension-courant. Cet étage 560 est configuré pour convertir la tension $V_{OUT}$ de sortie du circuit d'interface en un courant $I''=K_V*V_{OUT}$. L'étage 560 convertisseur tension-courant comprend, dans l'exemple illustré, un amplificateur 564, qui peut être couplé à des résistances $R_3$ et $R_4$ ainsi que des transistors 562a, 562b montés en miroir de courant.

Dans cet exemple de réalisation, le circuit 500 est doté d'un comparateur 471 produisant cette fois en sortie $S_{COMP}$ un signal $T_{ONEND}$ susceptible d'indiquer la fin d'une configuration de charge, lorsqu'en configuration de charge, la différence $V_4$-$V_3$ indique que l'on a atteint la valeur $R_{OPT}$.

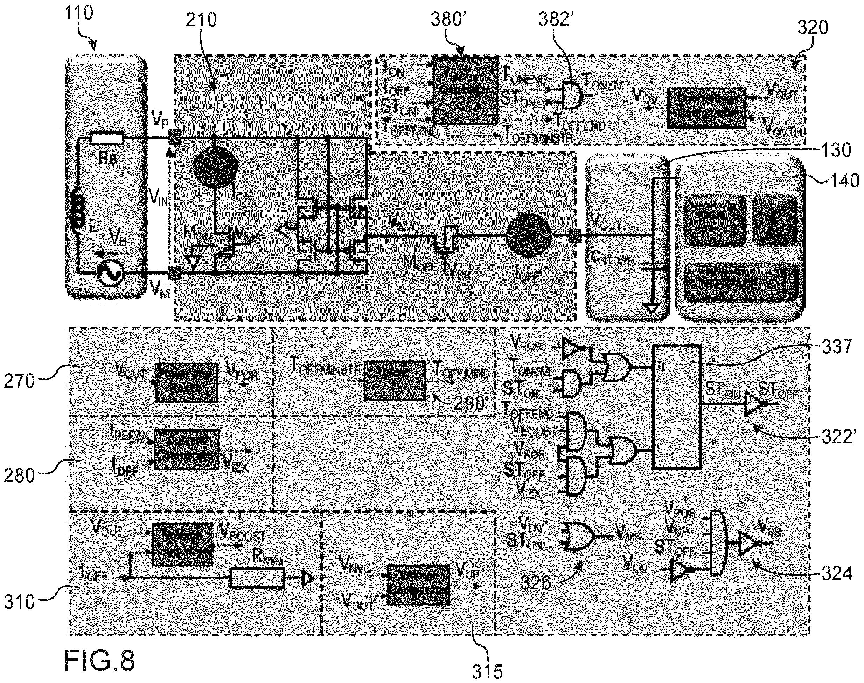

Dans l'exemple illustré sur la figure 8 de réalisation du circuit d'interface, la fin d'une configuration de charge est effectivement déclenchée par le bloc de contrôle 320 à l'aide d'un signal $T_{ONZM}$ indicateur d'impédance moyenne d'entrée optimale dont l'état dépend du signal $ST_{ON}$ indicateur de configuration de charge et du signal $T_{ONEND}$ témoignant ici d'un basculement en sortie du comparateur 471.

Le bloc 320 comporte cette fois un étage 322' avec une bascule 337 dont l'entrée RESET est dépendante des états respectifs du signal $ST_{ON}$ indicateur de configuration de charge et $T_{ONZM}$ indicateur d'impédance moyenne d'entrée optimale.

Cette variante de circuit de régulation permettant d'asservir l'impédance d'entrée présente, par rapport aux exemples précédents des figures 3 et 5, pour contrainte d'être plus encombrante et plus consommatrice, en particulier du fait du convertisseur tension/courant 560 qui ajoute de la surface occupée et de la consommation statique.

Dans l'un ou l'autre des exemples de réalisation qui ont été décrits précédemment, le bloc de contrôle 320 permettant de générer les signaux de commande $V_{MS}$, $V_{SR}$ des interrupteurs comprend typiquement, comme cela est illustré sur la figure 2 ou sur la figure 7, une pluralité d'étages 322, 324, 326, ou 322', 324, 326 formé de composants logiques utilisés en logique combinatoire et/ou séquentielle. Les étages 324, 326 sont en particulier dotés d'une ou plusieurs portes logiques 338, 339, 340, 342, tandis que l'étage 322 ou 322' est formé de portes logiques 331, 332, 333, 334, 335, 336, 341 et d'au moins un élément tel qu'une bascule 337 capable, dans certaines circonstances, de maintenir les valeurs de sa ou ses sorties malgré des changements de valeur(s) d'entrée(s).

Dans les exemples de réalisation illustrés sur les figures 2 et 7 l'état logique '0' ou '1' du signal de commande $V_{MS}$ de l'interrupteur 260 de charge est produit par un étage 326 et dépend ici de celui du signal $ST_{ON}$ indicateur de configuration de charge et d'un signal $V_{OV}$ de détection de surtension appliqués en entrée de cet étage 326.

Le signal $V_{OV}$ de détection de surtension peut être produit par un étage 320 de détection de surtensions de ladite tension $V_{OUT}$ aux bornes du moyen de stockage de charges $C_{STORE}$. L'étage 320 de détection de surtension peut être doté d'un comparateur configuré pour comparer ladite tension $V_{OUT}$ aux bornes dudit moyen de stockage de charges avec une tension de seuil prédéterminée $V_{OVTH}$.

Le signal de commande $V_{SR}$ est quant à lui produit par un étage 324 du bloc de contrôle 320 logique et a un état logique qui dépend ici de celui d'un signal de détection de seuil $V_{POR}$, d'un autre signal de détection $V_{UP}$, et du signal $ST_{OFF}$ indicateur de configuration décharge, ainsi que du signal $V_{OV}$ de détection de surtension.

Le signal de détection $V_{UP}$ peut provenir d'un étage 315 de détection muni d'un comparateur 316, apte à comparer la tension de sortie $V_{OUT}$ appliquée au moyen de stockage 130 de charges électriques et une tension $V_{NVC}$

en sortie du redresseur 210, et produire un signal $V_{UP}$ de comparaison indiquant, par exemple lorsque $V_{UP}$ est à un état logique '1' lorsque la tension $V_{NVC}$ en sortie du redresseur 210 dépasse la tension de sortie $V_{OUT}$.

Dans l'exemple illustré, le circuit d'interface 120 est doté également d'un bloc 270 de détection de valeur minimale de la tension de sortie $V_{OUT}$, apte à détecter un passage de cette tension $V_{OUT}$ appliquée au moyen de stockage 130 de charges électriques au-dessus de la valeur seuil minimale et produire lorsque cette détection est réalisée, le signal de détection de seuil $V_{POR}$ au bloc 320 de contrôle.

Un circuit électronique 120 d'interface correspondant à l'un ou l'autre des exemples de réalisation décrits précédemment peut, outre le mode « Boost » évoqué précédemment, adopter un mode de fonctionnement différent et que l'on appelle « linéaire ». Ce mode linéaire est établi notamment lorsque la capacité $C_{STORE}$ de sortie est déchargée ou lorsque, par rapport à une tension de sortie $V_{OUT}$ prise aux bornes de cette capacité $C_{STORE}$, la tension fournie par le récupérateur 110 est trop importante entre les bornes P et M. Ce mode de fonctionnement linéaire peut typiquement privilégié sur certaines portions des premières alternances, de plus grande amplitude, du signal délivré par le récupérateur 110 lorsque celui-ci est à fonctionnement intermittent.

Un passage du mode de fonctionnement linéaire au mode de fonctionnement Boost peut être réalisé lorsqu'une tension égale au produit $R_{MIN}*I_{OFF}$ d'un courant de décharge à destination de la capacité $C_{STORE}$ disposée en sortie du circuit d'interface 120 par une résistance de valeur prédéterminée $R_{min}$ devient inférieure à la tension de sortie $V_{OUT}$ aux bornes de la capacité $C_{STORE}$. Dans ce cas de figure, où $V_{OUT} \geq R_{min}*I_{OFF}$, le mode de fonctionnement « Boost » peut être adopté.

Le circuit d'interface 120 peut être muni d'un bloc de détection 310 de mode de fonctionnement. Ce bloc 310 est typiquement doté d'un comparateur 311 pour comparer la tension de sortie $V_{OUT}$ au produit $R_{MIN}*I_{OFF}$ et produire en sortie le signal $V_{BOOST}$ qui peut permettre de déclencher un passage au mode de fonctionnement « Boost ».

Dans l'un ou l'autre des exemples de réalisation décrits le circuit d'interface peut également comprendre en outre un étage 280 de détection de courant minimal. Cet étage peut être muni d'un comparateur de courant 281, pour comparer le courant $I_{OFF}$ avec un courant seuil. Le signal de détection de courant minimal $V_{IZX}$ à destination du bloc de contrôle 320 en sortie du comparateur 321 indique, par un changement d'état, par exemple mis à un niveau logique '1' lorsque le courant $I_{OFF}$ passe en dessous de ce seuil.

Un circuit de régulation tel que décrit dans l'un ou l'autre des modes de réalisation précédemment décrits permet de réguler l'impédance moyenne vue par le récupérateur à l'impédance optimale Ropt.

Ceci permet d'améliorer le rendement d'extraction sur une large plage de puissance (i.e. une large plage d'accélération du récupérateur) et également sur une large plage de tension de sortie VOUT du circuit d'interface.

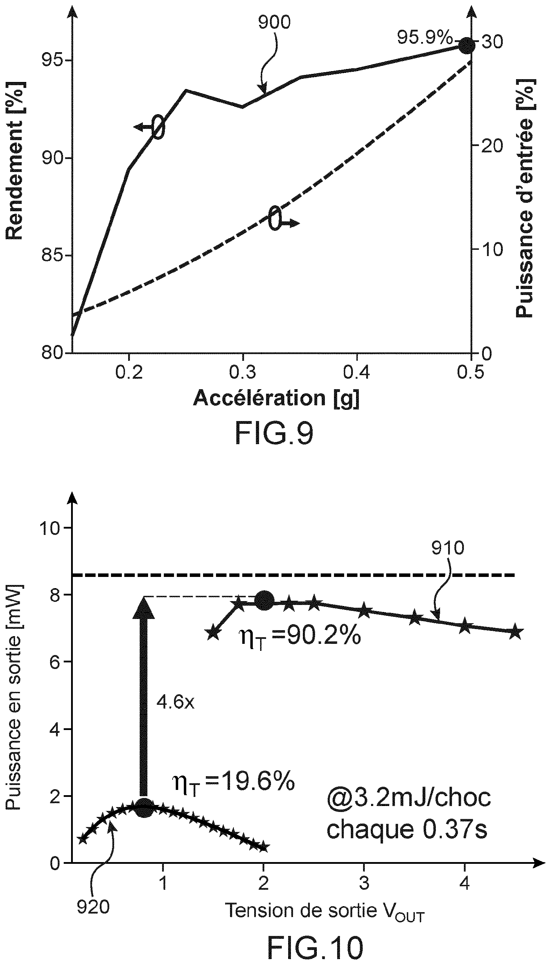

L'architecture proposée plus haut et permettant de passer d'un mode linéaire à un mode « boost » amène également un excellent rendement de conversion, pour accéder à un rendement total qui peut être supérieur à 90%. La figure 9 donne à titre d'exemple une courbe 900 de rendement obtenue avec un circuit d'interface couplé à un récupérateur électromagnétique ayant des paramètres Ks=4.4, Rs=34 ohm, Ls=2mH sur une plage d'accélération de 0.2g à 0.5g en mode d'excitation continue à une fréquence de 48Hz.

La figure 10 donne quant à elle une courbe 910 d'évolution de la puissance de sortie en fonction de la tension de sortie $V_{OUT}$ obtenue avec ce même récupérateur (Ks=4.4, Rs=34 ohm, Ls=2mH), mais utilisé dans un mode choc.

On obtient ici un rendement nettement supérieur à celui (courbe 920) obtenu avec une architecture de circuit d'interface conventionnelle à pont de diode et qui contrairement aux autres solutions de l'art antérieur n'utilise pas de composant externe de type inductance ou capacité.

Des variantes de réalisation d'un circuit électronique d'interface tel que décrit plus haut peuvent être prévues dans le cadre de l'invention. Par exemple, dans les modes de réalisation présentés précédemment, l'évaluation de la tension Vh est réalisée par une moyenne uniquement sur un temps $T_{ON}$ ou sur un temps $T_{OFF}$. Il serait possible de réaliser une évaluation de la tension Vh en réalisant une moyenne sur l'intégralité de la période $T=T_{ON}+T_{OFF}$. Pour ce faire, on pourrait par exemple envisager un circuit comprenant une partie « DEN » modifiée par rapport à celle des circuits des figures 3 et 7. L'évaluation de la tension Vh pourrait être dans ce cas plus précise mais au détriment de la compacité du circuit.

En outre, comme indiqué plus haut par soucis de simplification, les termes signaux AC et DC ont été utilisés pour désigner respectivement le signal fourni par le récupérateur d'énergie et le signal $V_{OUT}$ présent en sortie du circuit d'interface. Néanmoins, le signal d'entrée « AC » peut en pratique être un signal variable dont la polarité (en pratique celle de la source de tension Vh) reste inchangée. Un redresseur AC/DC pourrait alors s'avérer superflu et pourrait ne pas être présent dans le circuit d'interface. De même, le signal de sortie $V_{OUT}$ est dit continu DC, dans la mesure où dans les exemples illustrés il est produit aux bornes d'une capacité de stockage, qui peut également remplir une fonction de « lissage » et également parce qu'en pratique, on peut également prévoir que le circuit de charge soit doté d'un système de régulation de la tension de sortie $V_{OUT}$ qui permette de conserver cette tension dans une plage de tensions assurant un bon fonctionnement des divers circuits électriques reliés à Cstore. Néanmoins, un circuit d'interface peut également fonctionner même si le circuit de charge présente une tension $V_{OUT}$ fluctuante. La différence entre les deux signaux d'entrée et de sortie, appelés « AC » et « DC » porte donc davantage sur leur polarité, le signal d'entrée AC pouvant avoir une polarité variable (Vin positive ou négative) alors que le signal DC est toujours de même polarité, positive dans nos exemples. On notera en outre, qu'un circuit d'interface pourrait également fonctionner dans un cas où la tension Vh serait constante.

Ainsi, un avantage des divers exemples de circuit d'interface précédemment décrits est qu'ils ont un fonctionnement générique capable de s'adapter à différents types de récupérateur d'énergie, qu'ils présentent ou non une polarité variable, qu'ils présentent ou non une amplitude de tension variable, que leur fonctionnement soit intermittent ou non.

**Revendications**

1. Circuit électronique d'interface destiné à être relié en entrée à un étage (110) de récupération d'énergie, l'étage de récupération d'énergie ayant un circuit équivalent comprenant une source de tension alternative en série avec une inductance (Ls) et une résistance (Rs), le circuit électronique d'interface étant apte à être relié en sortie à un étage (130-140) de charge, le circuit électronique d'interface comprenant :

   - des première et deuxième bornes (P, M) d'entrée recevant un signal électrique délivré par ledit étage de récupération (110) entre ces bornes,
   - un premier interrupteur (260), agencé entre la première borne (P) et la deuxième borne (M) et apte à alternativement connecter ou déconnecter la première borne (P) et la deuxième borne (M) l'une de l'autre, l'état fermé ou ouvert du premier interrupteur (260) étant régi par un premier signal de commande ($V_{MS}$),
   - un deuxième interrupteur (240), disposé entre ladite première borne et l'étage (130-140) de charge et apte à alternativement connecter ou déconnecter une sortie du circuit électronique d'interface dudit étage de charge en permettant respectivement à un courant de circuler ou non entre ladite première borne et ledit étage de charge, l'état ouvert ou fermé du deuxième interrupteur (240) étant régi par un deuxième signal de commande ($V_{SR}$),
   - un bloc de contrôle (320) du premier interrupteur et du deuxième interrupteur configuré pour produire ledit premier signal de commande ($V_{MS}$) et ledit deuxième signal de commande ($V_{SR}$), le bloc de contrôle (320) étant apte à faire passer le circuit électronique d'interface dans un mode de fonctionnement dans lequel ledit circuit électronique d'interface suit une succession de phases durant chacune desquelles ledit circuit électronique d'interface adopte une première configuration puis une deuxième configuration, la première configuration étant une configuration parmi une configuration de décharge et une configuration de charge, la deuxième configuration étant une configuration parmi une configuration de charge et une configuration de décharge et différente la première configuration, la configuration de charge étant une configuration du premier interrupteur (260) et du deuxième interrupteur (240) de sorte à déconnecter la sortie du circuit électronique d'interface dudit étage de charge (130-140) et qu'un courant de charge $I_{ON}$ circule entre la première borne (P) et la deuxième borne (M), la configuration de décharge étant une configuration du premier interrupteur (260) et du deuxième interrupteur (240), de sorte que ladite première borne (P) et ladite deuxième borne (M) sont déconnectées entre elles et la sortie dudit circuit électronique d'interface est connectée à l'étage de charge de sorte qu'un courant de décharge $I_{OFF}$ circule entre la sortie du circuit électronique d'interface et l'étage (130-140) de charge, le circuit électronique d'interface étant doté en outre :
   - d'un circuit de régulation (400, 400', 500) pour à asservir une valeur moyenne d'impédance d'entrée ($\bar{\bar{Zin}}$) du circuit électronique d'interface à une valeur d'impédance optimale prédéterminée (Ropt), ledit circuit de régulation comprenant :
   - un premier circuit (NUM) délivrant un premier signal ($V_3$) proportionnel à un courant moyen ($\bar{Ih}$) dans l'inductance de l'étage de récupération, et
   - un deuxième circuit (DEN) délivrant un deuxième signal ($V_4$) proportionnel à une tension moyenne ($\bar{Vh}$) aux bornes de la source de tension interne dudit étage de récupération,
   - un comparateur (471) configuré pour comparer le premier signal ($V_3$) et le deuxième signal ($V_4$) et produire en sortie ($S_{COMP}$) en fonction de cette comparaison un signal indicateur ($T_{OFFEND}$, $T_{ONEND}$) apte à indiquer qu'un rapport entre la tension moyenne ($\bar{Vh}$) et le courant moyen ($\bar{Ih}$) sur un intervalle de temps donné a atteint la valeur d'impédance optimale prédéterminée (Ropt) et à déclencher un passage de ladite deuxième configuration à ladite première configuration.

2. Circuit électronique d'interface selon la revendication 1, dans lequel ledit circuit de régulation (400, 400', 500) comprend :

- un ou plusieurs étages (405, 415, 485, 596) de copie du courant de charge,
- un ou plusieurs étages (496, 505, 515, 585) de copie du courant de décharge,
- un étage dérivateur (410, 510) de courant de charge ou décharge,
- une pluralité d'étages intégrateurs (420, 440, 450, 520, 540, 550),

ledit circuit de régulation (400, 400', 500) étant configuré pour à partir d'au moins une copie du courant de charge ($I_{ON}$) et d'au moins une copie du courant de décharge ($I_{OFF}$) produire ledit premier signal ($V_3$) aux bornes d'une première capacité d'intégration ($C_3$) d'un premier étage intégrateur (450), et pour à partir d'au moins une copie du courant de charge ($I_{ON}$) et d'au moins une dérivée d'une copie du courant de charge ($I_{ON}$) ou à partir d'au moins une copie du courant de décharge ($I_{OFF}$) et d'au moins une dérivée d'une copie du courant de décharge ($I_{OFF}$), produire ledit deuxième signal ($V_4$) aux bornes d'une deuxième capacité d'intégration ($C_4$) d'un deuxième étage intégrateur (440).

**3.** Circuit électronique d'interface selon l'une des revendications 1 ou 2, le bloc de contrôle (320) étant configuré de sorte que :

- lorsque le circuit d'interface est dans ladite première configuration depuis une durée prédéfinie ($T_{ONmin}$, $2^*T_{ONmin}$), à l'issue de la durée prédéfinie :
- le bloc de contrôle (320) maintient la première configuration pendant au moins une période minimale prédéterminée lorsque la sortie ($S_{COMP}$) dudit comparateur (471) est dans un état prédéterminé, ladite durée prédéfinie étant égale à la période minimale prédéterminée ($T_{ON}min$) ou à un multiple ($2^*T_{ON}min$) de ladite période minimale prédéterminée,
- le bloc de contrôle (320) déclenche un passage de la première configuration à ladite deuxième configuration lorsque la sortie ($S_{COMP}$) dudit comparateur (471) est dans un autre état, différent dudit état prédéterminé, puis
- lorsque le circuit d'interface passe dans la deuxième configuration, le bloc de contrôle (320) maintient la deuxième configuration jusqu'à ce que la sortie ($S_{COMP}$) dudit comparateur (471) bascule dudit autre état audit état prédéterminé, cette bascule produisant ledit signal indicateur ($T_{OFFEND}$, $T_{ONEND}$).

**4.** Circuit électronique d'interface selon la revendication 3, dans lequel le circuit de régulation (400, 400', 500) comprend en outre : un premier élément de remise à zéro (420) et un deuxième élément de remise à zéro (440) configurés respectivement pour vider la première capacité ($C_3$) et la deuxième capacité ($C_4$) consécutivement à la réception d'un signal (RST) de remise à zéro, le signal de remise à zéro étant produit :

- lorsque ledit circuit d'interface est dans la première configuration et qu'au moins une période minimale prédéterminée ($T_{ON}min$) s'est écoulée depuis le passage dans la première configuration et que la sortie dudit comparateur (471) se trouve dans ledit état prédéterminé, ou
- lorsque ledit circuit d'interface se trouve dans la deuxième configuration et que la sortie dudit comparateur (471) bascule dans ledit état prédéterminé.

**5.** Circuit électronique d'interface selon l'une des revendications 2 à 4, comprenant en outre un étage de retard (290, 290') configuré pour émettre un signal ($T_{ONMIND}$) de fin de période minimale prédéterminée un délai prédéterminé après le début de la première configuration.

**6.** Circuit électronique d'interface selon la revendication 5, dans lequel le circuit de régulation (400, 400', 500) appartient à un bloc générateur (390, 390') à destination duquel le signal ($T_{ONMIND}$) de fin de période minimale prédéterminée est transmis, ledit bloc générateur (390, 390') étant configuré pour lorsque le circuit d'interface passe dans la première configuration, quel que soit l'état en sortie du comparateur (471) après la période minimale prédéterminée émettre le signal de remise à zéro (RST) puis, après une nouvelle période minimale prédéterminée, lorsque la sortie ($S_{COMP}$) dudit comparateur (471) est dans ledit autre état, émettre un signal indicateur ($T_{ONEND}$) de fin de première configuration.

**7.** Circuit électronique d'interface selon l'une des revendications 2 à 6, dans lequel la première capacité ($C_3$) se charge, pendant ledit intervalle de temps donné, à partir d'un courant dit « de numérateur » ($I_{NUM}$) qui dépend ou est égal à une somme :

- d'un courant ($K_{NP}^*I_{ON}$) résultant d'une copie du courant de charge ($I_{ON}$) pendant une durée ($T_{ON}$) d'une configuration de charge et,
- d'un autre courant ($K_{NP}^*I_{OFF}$) résultant d'une copie du courant de décharge ($I_{OFF}$) pendant une durée ($T_{OFF}$)

EP 3 843 255 B1

d'une configuration de décharge.

8. Circuit électronique d'interface selon la revendication 7, dans lequel le premier signal ($V_3$) dépend du produit :

$$\overline{I_H}T = \int_0^T T_{ON}I_{ON} + T_{OFF}I_{OFF}dt$$

avec :

- T la durée dudit intervalle de temps donné,
- $T_{ON}$ la durée de la configuration de charge pendant de l'intervalle de temps donné, et
- $T_{OFF}$ la durée de ladite configuration de décharge pendant l'intervalle de temps donné.

9. Circuit électronique d'interface selon l'une des revendications 2 à 6, dans lequel la première capacité ($C_3$) se charge à partir d'un courant dit « de numérateur » ($I_{NUM}$), le courant de numérateur dépendant ou étant égal à une somme :

- d'un courant ($K_{NP}*I_{ON}$) résultant d'une copie du courant de charge ($I_{ON}$) pendant une durée ($T_{ON}$) d'une configuration de charge,
- d'un courant ($K_{D2}*dI_{ON}/dt$) résultant d'une dérivée d'une copie du courant de charge ($I_{ON}$),
- d'un autre courant ($K_{NP}*I_{OFF}$) résultant d'une copie du courant de décharge ($I_{OFF}$) pendant une durée ($T_{OFF}$) d'une configuration de décharge.

10. Circuit électronique d'interface selon la revendication 9, dans lequel le premier signal ($V_3$) dépend du produit :

$$\overline{I_H}T = \int_0^T T_{ON}\left(I_{ON} - \frac{1}{2}T_{ON}\frac{dI_{ON}}{dt}\right) + T_{OFF}I_{OFF}dt$$

avec :

- T la durée dudit intervalle de temps donné,
- $T_{ON}$ la durée de la configuration de charge pendant ladite phase donnée, et
- $T_{OFF}$ la durée de ladite configuration de décharge pendant ledit intervalle de temps donné.

11. Circuit électronique d'interface selon l'une des revendications 7 à 10, dans lequel le circuit de régulation (500) comprend un autre étage intégrateur (520) doté d'une autre capacité d'intégration ($C_1$) qui se charge à partir d'un courant dit « de dénominateur » ($I_{DEN}$) et aux bornes de laquelle une tension ($V_1$) est produite, le courant de dénominateur ($I_{DEN}$) dépendant, ou étant égal à, la somme :

- d'un courant ($K_N*I_{ON}$) résultant d'une copie du courant de charge ($I_{ON}$) pendant la durée ($T_{ON}$) d'une configuration de charge,
- d'un autre courant ($K_{D1}*dI_{ON}/dt$) résultant d'une dérivée d'une copie du courant de charge ($I_{ON}$) pendant une durée ($T_{ON}$) d'une configuration de charge, ledit deuxième signal ($V_4$) produit aux bornes de ladite deuxième capacité d'intégration ($C_4$) se chargeant à partir d'un courant résultant d'une conversion tension-courant de ladite tension produite par ladite autre capacité d'intégration ($C_1$).

12. Circuit électronique d'interface selon la revendication 11, dans lequel ledit deuxième signal ($V_4$) est représentatif de la tension moyenne $\overline{Vh}$, avec :

$$\overline{Vh} * T_{ON} = R_S \int_0^{T_{ON}} \frac{L}{R_S} * \frac{dI_{ON}}{dt} + I_{ON}\, dt$$

$T_{ON}$ étant la durée d'une configuration de décharge.

17

**13.** Circuit électronique d'interface selon l'une des revendications 7 à 10, dans lequel ladite première configuration est une configuration de décharge, ledit signal indicateur ($T_{ONEND}$) indiquant une fin de configuration de charge, ledit circuit de régulation comprenant en outre :

- un étage (560) de conversion tension courant configuré pour convertir une copie d'une tension de sortie ($V_{OUT}$) en sortie dudit circuit d'interface en un courant ($I'=K_v*V_{OUT}$) image de cette tension de sortie, ledit circuit de régulation comportant un autre étage intégrateur (520) doté d'une autre capacité d'intégration ($C_1$) qui se charge à partir d'un courant dit « de dénominateur » ($I_{DEN}$) et aux bornes de laquelle une tension ($V_1$) dite « d'intégration » est produite, le courant de dénominateur ($I_{DEN}$) dépendant, ou étant égal à, la somme :
- d'un courant ($K_V*V_{OUT}$), résultant d'une conversion produit par ledit étage (560) de conversion tension courant,
- d'un courant ($K_P*I_{OFF}$) résultant d'une copie du courant de décharge ($I_{OFF}$),
- d'un autre courant ($K_{D1}*dI_{OFF}/dt$) résultant d'une dérivée d'une copie du courant de décharge ($I_{OFF}$), ledit deuxième signal ($V_4$) étant produit aux bornes de ladite deuxième capacité d'intégration ($C_4$) se chargeant à partir d'un courant résultant d'une conversion tension-courant de ladite tension d'intégration produite par ladite autre capacité d'intégration.

**14.** Circuit électronique d'interface selon la revendication 13, dans lequel le deuxième signal ($V_4$) est représentatif de la tension moyenne $\overline{Vh}$, telle que :

$$\overline{Vh} * T_{OFF} = R_S \int_0^{T_{OFF}} \frac{L}{R_S} * \frac{dI_{OFF}}{dt} + \frac{V_{OUT}}{R_S} + I_{OFF}\, dt$$

$T_{OFF}$ étant la durée d'une configuration de décharge.

**15.** Circuit selon l'une des revendications 11 à 14, le circuit de régulation comprenant en outre : un élément de remise à zéro (420) de ladite autre capacité d'intégration ($C_1$).

**Patentansprüche**

**1.** Elektronischer Schnittstellenschaltkreis, dazu bestimmt, am Eingang mit einer Energierückgewinnungsstufe (110) verbunden zu werden, wobei die Energierückgewinnungsstufe einen äquivalenten Schaltkreis aufweist, umfassend eine Wechselspannungsquelle in Reihe mit einer Induktanz (Ls) und einem Widerstand (Rs), wobei der elektronische Schnittstellenschaltkreis geeignet ist, am Ausgang mit einer Aufladestufe (130-140) verbunden zu werden, wobei der elektronische Schnittstellenschaltkreis umfasst:

- erste und zweite Eingangsanschlüsse (P, M), die ein durch die Rückgewinnungsstufe (110) zwischen diesen Anschlüssen geliefertes elektrisches Signal empfangen,
- einen ersten Schalter (260), angeordnet zwischen dem ersten Anschluss (P) und dem zweiten Anschluss (M) und geeignet, den ersten Anschluss (P) und den zweiten Anschluss (M) aneinander anzuschließen oder voneinander zu trennen, wobei der geschlossene oder offene Zustand des ersten Schalters (260) durch ein erstes Steuerungssignal ($V_{MS}$) geregelt wird,
- einen zweiten Schalter (240), angebracht zwischen dem ersten Anschluss und der Aufladestufe (130-140) und geeignet, alternativ einen Ausgang des elektronischen Schnittstellenschaltkreises der Aufladestufe anzuschließen oder zu trennen, indem einem Strom jeweils erlaubt wird, zwischen dem ersten Anschluss und der Aufladestufe zu fließen oder nicht, wobei der offene oder geschlossene Zustand des zweiten Schalters (240) durch ein zweites Steuerungssignal ($V_{SR}$) geregelt wird,
- einen Steuerblock (320) des ersten Schalters und des zweiten Schalters, konfiguriert, um das erste Steuerungssignal ($V_{MS}$) und das zweite Steuerungssignal ($V_{RS}$) zu erzeugen, wobei der Steuerblock (320) geeignet ist, den elektronische Schnittstellenschaltkreis in einen Funktionsmodus zu versetzen, in dem der elektronische Schnittstellenschaltkreis einer Abfolge von Phasen folgt, während jeder von denen der elektronische Schnittstellenschaltkreis eine erste Konfiguration, danach eine zweite Konfiguration annimmt, wobei die erste Konfiguration eine Konfiguration ist unter einer Entladekonfiguration und einer Aufladekonfiguration, wobei die zweite Konfiguration eine Konfiguration ist unter einer Aufladekonfiguration und einer Entladekonfiguration und sich von der ersten Konfiguration unterscheidet, wobei die Aufladekonfiguration eine Konfiguration des ersten Schalters (260) und des zweiten Schalters (240) derart ist, um den Ausgang des elektronischen Schnittstellenschaltkreises von der Aufladestufe (130-140) zu trennen und wobei der Aufladestrom $I_{ON}$ zwischen dem ersten Anschluss (P) und dem zweiten Anschluss (M) fließt, die Entladekonfiguration eine Konfiguration des ersten Schalters (260) und des zweiten Schalters (240) derart ist, dass der erste Anschluss (P) und der zweite Anschluss (M) untereinander getrennt werden und der Ausgang des elektronischen Schnittstellenschaltkreises mit der Aufladestufe derart verbunden wird, dass ein Entladestrom $I_{OFF}$ zwischen dem Ausgang des elektronischen Schnittstellenschaltkreises und der Aufladestufe (130-140) fließt, wobei der elektronische Schnittstellenschaltkreis des Weiteren ausgestattet ist mit:

- einem Regelschaltkreis (400, 400', 500), um einen Eingangsimpedanzmittelwert ($\bar{Zin}$) des elektronischen Schnittstellenschaltkreises auf einen optimalen, vorher festgelegten Impedanzwert (Ropt) zu regeln, wobei der Regelschaltkreis umfasst

- einen ersten Schaltkreis (NUM), der ein einem mittleren Strom ($\bar{Ih}$) in der Induktanz der Rückgewinnungsstufe proportionales erstes Signal ($V_3$) liefert, und

- einen zweiten Schaltkreis (DEN), der ein einer mittleren Spannung ($\bar{Vh}$) an den Anschlüssen der internen Spannungsquelle der Rückgewinnungsstufe proportionales Signal ($V_4$) liefert,

- einen Komparator (471), konfiguriert, um das erste Signal ($V_3$) und das zweite Signal ($V_4$) zu vergleichen und am Ausgang ($S_{COMP}$) in Funktion dieses Vergleichs ein Indikatorsignal ($T_{OFFEND}$, $T_{ONEND}$) zu erzeugen, das geeignet ist, anzugeben, dass ein Verhältnis zwischen der mittleren Spannung ($\bar{Vh}$) und dem mittleren Strom ($\bar{Ih}$) über ein gegebenes Zeitintervall den vorher festgelegten optimalen Impedanzwert (Ropt) erreicht hat, und um einen Übergang von der zweiten Konfiguration zu der ersten Konfiguration auszulösen.

2. Elektronischer Schnittstellenschaltkreis nach Anspruch 1, wobei der Regelschaltkreis (400, 400', 500) umfasst:

   - eine oder mehrere Kopiestufen (405, 415, 485, 596) des Aufladestroms,
   - eine oder mehrere Kopiestufen (496, 505, 515, 585) des Entladestroms,
   - eine Ableiterstufe (410, 510) des Auflade- oder Entladestroms,
   - eine Vielzahl von Integratorstufen (420, 440, 450, 520, 540, 550),

   wobei der Regelschaltkreis (400, 400', 500) konfiguriert ist, um ausgehend von mindestens einer Kopie des Aufladestroms ($I_{ON}$) und mindestens einer Kopie des Entladestroms ($I_{OFF}$) das erste Signal ($V_3$) an den Anschlüssen einer ersten Integrationskapazität ($C_3$) einer ersten Integratorstufe (450) zu erzeugen, und um ausgehend von mindestens einer Kopie des Aufladestroms ($I_{ON}$) und mindestens einer Ableitung einer Kopie des Aufladestroms ($I_{ON}$) oder ausgehend von mindestens einer Kopie des Entladestroms ($I_{OFF}$) und mindestens einer Ableitung einer Kopie des Entladestroms ($I_{OFF}$) das zweite Signal ($V_4$) an den Anschlüssen einer zweiten Integrationskapazität ($C_4$) einer zweiten Integratorstufe (440) zu erzeugen.

3. Elektronischer Schnittstellenschaltkreis nach einem der Ansprüche 1 oder 2, wobei der Steuerblock (320) derart konfiguriert ist, dass:

   - wenn der Schnittstellenschaltkreis seit einer vordefinierten Dauer ($T_{ONmin}$, $2*T_{ONmin}$) in der ersten Konfiguration vorliegt, am Ende von der vordefinierten Dauer:
   - der Steuerblock (320) die erste Konfiguration während mindestens einer minimalen vorher festgelegten Periode aufrecht erhält, wenn der Ausgang ($S_{COMP}$) des Komparators (471) in einem vorher festgelegten Zustand vorliegt, wobei die vordefinierte Dauer gleich der minimalen vorher festgelegten Periode ($T_{ON}min$) oder einem Vielfachen ($2*T_{ONmin}$) der minimalen vorher festgelegten Periode ist,
   - der Steuerblock (320) einen Übergang der ersten Konfiguration zu der zweiten Konfiguration auslöst, wenn der Ausgang ($S_{COMP}$) des Komparators (471) in einem von dem vorher festgelegten Zustand verschiedenen anderen Zustand vorliegt, wonach
   - wenn der Schnittstellenschaltkreis in die zweite Konfiguration übergeht, der Steuerblock (320) die zweite Konfiguration aufrecht erhält, bis der Ausgang ($S_{COMP}$) des Komparators (471) von dem anderen Zustand zu dem vorher festgelegten Zustand wechselt, wobei dieser Wechsel das Indikatorsignal ($T_{OFFEND}$, $T_{ONEND}$) erzeugt.

4. Elektronischer Schnittstellenschaltkreis nach Anspruch 3, wobei der Regelschaltkreis (400, 400', 500) des Weiteren umfasst: ein erstes Rücksetzelement (420) und ein zweites Rücksetzelement (440), jeweils konfiguriert zum Entleeren der ersten Kapazität ($C_3$) und der zweiten Kapazität ($C_4$) nacheinander beim Empfang eines Signals (RST) zum Rücksetzen, wobei das Signal zum Rücksetzen erzeugt wird:

- wenn der Schnittstellenschaltkreis in der ersten Konfiguration vorliegt und mindestens eine minimale vorher festgelegte Periode ($T_{ON}$min) seit dem Übergang in die erste Konfiguration verstrichen ist und sich der Ausgang des Komparators (471) in dem vorher festgelegten Zustand befindet, oder

- wenn sich der Schnittstellenschaltkreis in der zweiten Konfiguration befindet und der Ausgang des Komparators (471) in den vorher festgelegten Zustand wechselt.

5. Elektronischer Schnittstellenschaltkreis nach einem der Ansprüche 2 bis 4, des Weiteren umfassend eine Verzögerungsstufe (290, 290'), konfiguriert zum Emittieren eines Signals ($T_{ONMIND}$) des Endes der vorher festgelegten minimalen Periode einen vorher festgelegten Zeitraum nach dem Anfang der ersten Konfiguration.

6. Elektronischer Schnittstellenschaltkreis nach Anspruch 5, wobei der Regelschaltkreis (400, 400', 500) zu einem Generatorblock (390, 390') gehört, mit dem als Ziel das Signal ($T_{ONMIND}$) des Endes der vorher festgelegten minimalen Periode übermittelt wird, wobei der Generatorblock (390, 390') konfiguriert ist, um, wenn der Schnittstellenschaltkreis in die erste Konfiguration übergeht, ungeachtet des Zustands am Ausgang des Komparators (471) nach der vorher festgelegten minimalen Periode ist, das Signal zum Rücksetzen (RST) zu emittieren, danach, nach einer neuen vorher festgelegten minimalen Periode, wenn der Ausgang ($S_{COMP}$) des Komparators (471) in dem anderen Zustand vorliegt, ein Indikatorsignal ($T_{ONEND}$) des Endes der ersten Konfiguration zu emittieren.

7. Elektronischer Schnittstellenschaltkreis nach einem der Ansprüche 2 bis 6, wobei die erste Kapazität ($C_3$) sich während des gegebenen Zeitintervalls ausgehend von einem Strom, dem "Zähler" ($I_{NUM}$) auflädt, der abhängt von oder gleich ist einer Summe:

- eines Stroms ($K_{NP}*I_{ON}$), der aus einer Kopie des Aufladestroms ($I_{ON}$) während einer Dauer ($T_{ON}$) einer Aufladekonfiguration resultiert, und
- eines anderen Stroms ($K_{NP}*I_{OFF}$), der aus einer Kopie des Entladestroms ($I_{OFF}$) während einer Dauer ($T_{OFF}$) einer Entladekonfiguration resultiert.

8. Elektronischer Schnittstellenschaltkreis nach Anspruch 7, wobei das erste Signal ($V_3$) abhängt von dem Produkt:

$$\overline{I_H}T = \int_0^T T_{ON}I_{ON} + T_{OFF}I_{OFF}\,dt$$

mit:

- T die Dauer des gegebenen Zeitintervalls,
- $T_{ON}$ die Dauer der Aufladekonfiguration während des gegebenen Zeitintervalls und
- $T_{OFF}$ die Dauer der Entladekonfiguration während des gegebenen Zeitintervalls.

9. Elektronischer Schnittstellenschaltkreis nach einem der Ansprüche 2 bis 6, wobei die erste Kapazität ($C_3$) sich ausgehend von einem Strom, dem "Zähler" ($I_{NUM}$) auflädt, wobei der Zählerstrom abhängt von oder gleich ist einer Summe:

- eines Stroms ($K_{NP}*I_{ON}$), der aus einer Kopie des Aufladestroms ($I_{ON}$) während einer Dauer ($T_{ON}$) einer Aufladekonfiguration resultiert,
- eines Stroms ($K_{D2}*dI_{ON}/dt$), der aus einer Ableitung einer Kopie des Aufladestroms ($I_{ON}$) resultiert,
- eines anderen Stroms ($K_{NP}*I_{OFF}$), der aus einer Kopie des Entladestroms ($I_{OFF}$) während einer Dauer ($T_{OFF}$) einer Entladekonfiguration resultiert.

10. Elektronischer Schnittstellenschaltkreis nach Anspruch 9, wobei das erste Signal ($V_3$) abhängt von dem Produkt:

$$\overline{I_H}T = \int_0^T T_{ON}\left(I_{ON} - \frac{1}{2}T_{ON}\frac{dI_{ON}}{dt}\right) + T_{OFF}I_{OFF}\,dt$$

mit:

- T die Dauer des gegebenen Zeitintervalls,
- $T_{ON}$ die Dauer der Aufladekonfiguration während der gegebenen Phase und
- $T_{OFF}$ die Dauer der Entladekonfiguration während des gegebenen Zeitintervalls.

11. Elektronischer Schnittstellenschaltkreis nach einem der Ansprüche 7 bis 10, wobei der Regelschaltkreis (500) eine andere Integratorstufe (520) umfasst, ausgestattet mit einer anderen Integrationskapazität ($C_1$), die sich ausgehend von einem Strom, dem "Nenner" ($I_{DEN}$), auflädt und an deren Anschlüssen eine Spannung ($V_1$) erzeugt wird, wobei der Nennerstrom ($I_{DEN}$) abhängt von oder gleich ist der Summe:

- eines Stroms ($K_{NP}*I_{ON}$), der aus einer Kopie des Aufladestroms ($I_{ON}$) während der Dauer ($T_{ON}$) einer Aufladekonfiguration resultiert,
- eines anderen Stroms ($K_{D1}*dI_{ON}/dt$), der aus einer Ableitung einer Kopie des Aufladestroms ($I_{ON}$) während einer Dauer ($T_{ON}$) einer Aufladekonfiguration resultiert, wobei das an den Anschlüssen der zweiten Integrationskapazität ($C_4$) erzeugte zweite Signal ($V_4$) ausgehend von einem Strom aufgeladen wird, der aus einer Spannung-Strom-Umwandlung der Spannung resultiert, die durch die andere Integrationskapazität ($C_1$) erzeugt wird.

12. Elektronischer Schnittstellenschaltkreis nach Anspruch 11, wobei das zweite Signal ($V_4$) repräsentativ ist für die mittlere Spannung ($\overline{Vh}$), mit:

$$\overline{Vh} * T_{ON} = R_S \int_0^{T_{ON}} \frac{L}{R_S} * \frac{dI_{ON}}{dt} + I_{ON}\ dt$$

$T_{ON}$ ist die Dauer einer Entladekonfiguration.

13. Elektronischer Schnittstellenschaltkreis nach einem der Ansprüche 7 bis 10, wobei die erste Konfiguration eine Entladekonfiguration ist, wobei das Indikatorsignal ($T_{ONEND}$) ein Ende der Aufladekonfiguration angibt, wobei der Regelschaltkreis des Weiteren umfasst:

- eine Spannung-Strom-Umwandlungsstufe (560), konfiguriert zum Umwandeln einer Kopie einer Ausgangsspannung ($V_{OUT}$) am Ausgang des Schnittstellenschaltkreises in einen Bilderstrom ($I'=K_V*V_{OUT}$) dieser Ausgangsspannung, wobei der Regelschaltkreis eine andere Integratorstufe (520) beinhaltet, ausgestattet mit einer anderen Integrationskapazität ($C_1$), sie sich ausgehend von einem Strom, dem "Nenner" ($I_{DEN}$) auflädt und an deren Anschlüssen eine Spannung ($V_1$), die "Integration", erzeugt wird, wobei der Nennerstrom ($I_{DEN}$) abhängt von oder gleich ist der Summe:
- eines Stroms ($K_V*V_{OUT}$), der aus einer Umwandlung resultiert, die durch die Spannung-Strom-Umwandlungsstufe (560) erzeugt wird,
- eines Stroms ($K_P*I_{OFF}$), der aus einer Kopie des Entladestroms ($I_{OFF}$) resultiert,
- eines anderen Stroms ($K_{D1}*dI_{OFF}/dt$), der aus einer Ableitung einer Kopie des Entladestroms ($I_{OFF}$) resultiert, wobei das zweite Signal ($V_4$) an den Anschlüssen der zweiten Integrationskapazität ($C_4$) erzeugt wird, die sich ausgehend von einem Strom auflädt, der aus einer Spannung-Strom-Umwandlung der Integrationsspannung resultiert, die durch die andere Integrationskapazität erzeugt wird.

14. Elektronischer Schnittstellenschaltkreis nach Anspruch 13, wobei das zweite Signal ($V_4$) repräsentativ ist für die mittlere Spannung ($\overline{Vh}$), sodass:

$$\overline{Vh} * T_{OFF} = R_S \int_0^{T_{OFF}} \frac{L}{R_S} * \frac{dI_{OFF}}{dt} + \frac{V_{OUT}}{R_S} + I_{OFF}\ dt$$

$T_{OFF}$ die Dauer einer Entladekonfiguration ist.

15. Schaltkreis nach einem der Ansprüche 11 bis 14, wobei der Regelschaltkreis des Weiteren umfasst: ein Rücksetzelement (420) der anderen Integrationskapazität ($C_1$).

**Claims**

1. An interface electronic circuit intended to be connected at the input to an energy harvesting stage (110), the energy harvesting stage having an equivalent circuit comprising an alternating voltage source in series with an inductor (Ls) and a resistor (Rs), the interface electronic circuit being able to be connected at the output to a charging stage (130-140), the interface electronic circuit comprising:

   - first and second input terminals (P, M) receiving an electrical signal delivered by said harvesting stage (110) between these terminals,
   - a first switch (260), arranged between the first terminal (P) and the second terminal (M) and capable of alternately connecting or disconnecting the first terminal (P) and the second terminal (M) from each other, the closed or open state of the first switch (260) being governed by a first control signal ($V_{MS}$),
   - a second switch (240), disposed between said first terminal and the charging stage (130-140) and capable of alternately connecting or disconnecting an output of the interface electronic circuit of said charging stage by respectively allowing a current to flow or not between said first terminal and said charging stage, the open or closed state of the second switch (240) being governed by a second control signal ($V_{SR}$),
   - a block (320) for controlling the first switch and the second switch configured to produce said first control signal ($V_{MS}$) and said second control signal ($V_{SR}$), the control block (320) being able to pass the interface electronic circuit into an operating mode wherein said interface electronic circuit follows a succession of phases during each of which said interface electronic circuit adopts a first configuration and then a second configuration, the first configuration being a configuration among a discharging configuration and a charging configuration, the second configuration being a configuration among a charging configuration and a discharging configuration and different from the first configuration, the charging configuration being a configuration of the first switch (260) and of the second switch (240) so as to disconnect the output of the interface electronic circuit from said charging stage (130-140) and that a charge current $I_{ON}$ flows between the first terminal (P) and the second terminal (M), the discharging configuration being a configuration of the first switch (260) and of the second switch (240), so that said first terminal (P) and said second terminal (M) are disconnected from each other and the output of said interface electronic circuit is connected to the charging stage so that a discharge current $I_{OFF}$ flows between the output of the interface electronic circuit and the charging stage (130-140), the interface electronic circuit being further provided with:
   - a regulation circuit (400, 400', 500) for servo-controlling an average input impedance value ($\overline{\overline{Zin}}$) of the interface electronic circuit to a predetermined optimum impedance value (Ropt), said regulation circuit comprising:
   - a first circuit (NUM) delivering a first signal ($V_3$) proportional to an average current ($\overline{\overline{Ih}}$) in the inductor of the harvesting stage, and
   - a second circuit (DEN) delivering a second signal ($V_4$) proportional to an average voltage ($\overline{\overline{Vh}}$) at the terminals of the internal voltage source of said harvesting stage,
   - a comparator (471) configured to compare the first signal ($V_3$) and the second signal ($V_4$) and produce at the output ($S_{COMP}$) according to this comparison an indicator signal ($T_{OFFEND}$, $T_{ONEND}$) capable of indicating that a ratio between the average voltage ($\overline{\overline{Vh}}$) and the average current ($\overline{\overline{Ih}}$) over a given time interval has reached the predetermined optimum impedance value (Ropt) and of triggering a passage from said second configuration to said first configuration.

2. The interface electronic circuit according to claim 1, wherein said regulation circuit (400, 400', 500) comprises:

   - one or more charge current copy stages (405, 415, 485, 596),
   - one or more discharge current copy stages (496, 505, 515, 585),
   - a charge or discharge current differentiator stage (410, 510),
   - a plurality of integrator stages (420, 440, 450, 520, 540, 550),

   said regulation circuit (400, 400', 500) being configured, from at least one copy of the charge current ($I_{ON}$) and at least one copy of the discharge current ($I_{OFF}$), to produce said first signal ($V_3$) at the terminals of a first integration capacitor ($C_3$) of a first integrator stage (450), and from at least one copy of the charge current ($I_{ON}$) and at least one derivative of a copy of the charge current ($I_{ON}$) or from at least one copy of the discharge current ($I_{OFF}$) and at least one derivative of a copy of the discharge current ($I_{OFF}$), to produce said second signal ($V_4$) at the terminals of a second integration capacitor ($C_4$) of a second integrator stage (440).

3. The interface electronic circuit according to any of the claims 1 or 2, the control block (320) being configured so that:

- when the interface circuit is in said first configuration for a predefined duration ($T_{ONmin}$, $2^*T_{ONmin}$), at the end of the predefined duration:
- the control block (320) maintains the first configuration for at least a predetermined minimum period when the output ($S_{COMP}$) of said comparator (471) is in a predetermined state, said predefined duration being equal to the predetermined minimum period ($T_{ONmin}$) or to a multiple ($2^*T_{ONmin}$) of said predetermined minimum period,
- the control block (320) triggers a passage from the first configuration to said second configuration when the output ($S_{COMP}$) of said comparator (471) is in another state, different from said predetermined state, then
- when the interface circuit passes into the second configuration, the control block (320) maintains the second configuration until the output ($S_{COMP}$) of said comparator (471) switches from said other state to said predetermined state, this switching producing said indicator signal ($T_{OFFEND}$, $T_{ONEND}$).

4. The interface electronic circuit according to claim 3, wherein the regulation circuit (400, 400', 500) further comprises: a first reset element (420) and a second reset element (440) configured respectively to empty the first capacitor ($C_3$) and the second capacitor ($C_4$) following the reception of a reset signal (RST), the reset signal being produced:

- when said interface circuit is in the first configuration and at least a predetermined minimum period ($T_{ON}min$) has expired since the passage into the first configuration and the output of said comparator (471) is in said predetermined state, or
- when said interface circuit is in the second configuration and the output of said comparator (471) switches to said predetermined state.

5. The interface electronic circuit according to any of the claims 2 to 4, further comprising a delay stage (290, 290') configured to emit a signal ($T_{ONMIND}$) of the end of a predetermined minimum period a predetermined delay after the start of the first configuration.

6. The interface electronic circuit according to claim 5, wherein the regulation circuit (400, 400', 500) belongs to a generator block (390, 390') to which the signal ($T_{ONMIND}$) of the end of the predetermined minimum period is transmitted, said generator block (390, 390') being configured, when the interface circuit passes into the first configuration, regardless of the state at the output of the comparator (471) after the predetermined minimum period, to emit the reset signal (RST) then, after a new predetermined minimum period, when the output ($S_{COMP}$) of said comparator (471) is in said other state, to emit a signal ($T_{ONEND}$) indicating the end of the first configuration.

7. The interface electronic circuit according to any of the claims 2 to 6, wherein the first capacitor ($C_3$) is charged, during said given time interval, from a current called "numerator" current ($I_{NUM}$) which depends on or is equal to a sum:

- of a current ($K_{NP}^*I_{ON}$) resulting from a copy of the charge current ($I_{ON}$) for a duration ($T_{ON}$) of a charging configuration and,
- of another current ($K_{NP}^*I_{OFF}$) resulting from a copy of the discharge current ($I_{OFF}$) for a duration ($T_{OFF}$) of a discharging configuration.

8. The interface electronic circuit according to claim 7, wherein the first signal ($V_3$) depends on the product:

$$\overline{I_H}T = \int_0^T T_{ON}I_{ON} + T_{OFF}I_{OFF}\,dt$$

with:

- T the duration of said given time interval,
- $T_{ON}$ the duration of the charging configuration during the given time interval, and
- $T_{OFF}$ the duration of said discharging configuration during the given time interval.

9. The interface electronic circuit according to any of the claims 2 to 6, wherein the first capacitor ($C_3$) is charged from

a current called "numerator" current ($I_{NUM}$), the numerator current depending on or being equal to a sum:

- of a current ($K_{NP}*I_{ON}$) resulting from a copy of the charge current ($I_{ON}$) for a duration ($T_{ON}$) of a charging configuration,
- of a current ($K_{D2}*dI_{ON}/dt$) resulting from a derivative of a copy of the charge current ($I_{ON}$),
- of another current ($K_{NP}*I_{OFF}$) resulting from a copy of the discharge current ($I_{OFF}$) for a duration ($T_{OFF}$) of a discharging configuration.

10. The interface electronic circuit according to claim 9, wherein the first signal ($V_3$) depends on the product:

$$\overline{I_H}T = \int_0^T T_{ON}\left(I_{ON} - \frac{1}{2}T_{ON}\frac{dI_{ON}}{dt}\right) + T_{OFF}I_{OFF}\,dt$$

with:

- T the duration of said given time interval,
- $T_{ON}$ the duration of the charging configuration during said given phase, and
- $T_{OFF}$ the duration of said discharging configuration during said given time interval.

11. The interface electronic circuit according to any of the claims 7 to 10, wherein the regulation circuit (500) comprises another integrator stage (520) provided with another integration capacitor ($C_1$) which is charged from a current called "denominator" current ($I_{DEN}$) and at the terminals of which a voltage ($V_1$) is produced, the denominator current ($I_{DEN}$) depending on, or being equal to, the sum:

- of a current ($K_N*I_{ON}$) resulting from a copy of the charge current ($I_{ON}$) for the duration ($T_{ON}$) of a charging configuration,
- of another current ($K_{D1}*dI_{ON}/dt$) resulting from a derivative of a copy of the charge current ($I_{ON}$) for a duration ($T_{ON}$) of a charging configuration, said second signal ($V_4$) produced at the terminals of said second integration capacitor ($C_4$) being charged from a current resulting from a voltage-to-current conversion of said voltage produced by said other integration capacitor ($C_1$).

12. The interface electronic circuit according to claim 11, wherein said second signal ($V_4$) is representative of the average voltage $\overline{Vh}$, with:

$$\overline{Vh} * T_{ON} = R_S \int_0^{T_{ON}} \frac{L}{R_S} * \frac{dI_{ON}}{dt} + I_{ON}\,dt$$

$T_{ON}$ being the duration of a discharging configuration.

13. The interface electronic circuit according to claims 7 to 10, wherein said first configuration is a discharging configuration, said indicator signal ($T_{ONEND}$) indicating an end-of-charging configuration, said regulation circuit further comprising:

- a voltage-to-current conversion stage (560) configured to convert a copy of an output voltage ($V_{OUT}$) at the output of said interface circuit into an image current ($I' = K_V*V_{OUT}$) of this output voltage, said regulation circuit including another integrator stage (520) provided with another integration capacitor ($C_1$) which is charged from a current called "denominator" current ($I_{DEN}$) and at the terminals of which a voltage ($V_1$) called "integration" voltage is produced, the denominator current ($I_{DEN}$) depending on, or being equal to, the sum:
- of a current ($K_V*V_{OUT}$), resulting from a conversion produced by said voltage-to-current conversion stage (560),
- of a current ($K_P*I_{OFF}$) resulting from a copy of the discharge current ($I_{OFF}$),
- of another current ($K_{D1}*dI_{OFF}/dt$) resulting from a derivative of a copy of the discharge current ($I_{OFF}$), said second signal ($V_4$) being produced at the terminals of said second integration capacitor ($C_4$) being charged from a current resulting from a voltage-to-current conversion of said integration voltage produced by said other integration capacitor.

**14.** The interface electronic circuit according to claim 13, wherein the second signal ($V_4$) is representative of the average voltage $\overline{Vh}$, such that:

$$\overline{Vh} * T_{OFF} = R_S \int_0^{T_{OFF}} \frac{L}{R_S} * \frac{dI_{OFF}}{dt} + \frac{V_{OUT}}{R_S} + I_{OFF} \, dt$$

$T_{OFF}$ being the duration of a discharging configuration.

**15.** The circuit according to any of the claims 11 to 14, the regulation circuit further comprising: an element (420) for resetting said other integration capacitor (Ci).

FIG.1

FIG.2

EP 3 843 255 B1

FIG.3

FIG.4

FIG.5

FIG.6

FIG.7

EP 3 843 255 B1

FIG.8

FIG.9

FIG.10

**RÉFÉRENCES CITÉES DANS LA DESCRIPTION**

**Littérature non-brevet citée dans la description**

- Boost Converter With Dynamic Input Impedance Matching for Energy Harvesting With Multi-Array Thermoelectric Generators. *IEEE TRANSACTIONS ON INDUSTRIAL ELECTRONICS*
- **RADHAKRISHNA et al.** A low-power integrated power converter for an electromagnetic vibration energy harvester with 150 mV-AC sold startup, frequency tuning, and 50 Hz AC-to-DC conversion. *IEEE,* 2018
- **LEICHT et al.** Electromagnetic Vibration Energy Harvester Interface IC with Conduction-Angle-Controlled Maximum-Power-Point Tracking and Harvesting Efficiencies of up to 90%. *ISSCC,* 2015